# EUROPEAN PATENT SPECIFICATION

(11) **EP 1 553 358 B1**
(45) Date of publication and mention of the grant of the patent: **18.11.2015**
(21) Application number: 03766682.3
(22) Date of filing: 31.07.2003
(51) Int. Cl.: F24F 11/02, F24F 1/00, F24F 13/15

(54) **AIR CONDITIONER**
KLIMAANLAGE
CLIMATISEUR

(30) Priority: 05.08.2002 JP 2002226918
(43) Date of publication of application: 13.07.2005
(73) Proprietor: Sharp Kabushiki Kaisha, Osaka-shi, Osaka 545-0013 (JP)
(72) Inventor: OHTSUKA, Masaki, Osaka-shi, Osaka 547-0026 (JP); SHIRAICHI, Yukishige, Yao-shi, Osaka 581-0068 (JP); OHNISHI, Ryohta, Nara-shi, Nara 630-8036 (JP)
(74) Representative: Treeby, Philip David William
(86) International application number: PCT/JP2003/009764
(87) International publication number: WO 2004/013542

(56) References cited:
- JP-A- 5 066 053
- JP-A- 9 170 800
- JP-A- 9 315 141
- JP-A- 10 019 300
- JP-A- 11 037 537
- JP-A- 11 132 541
- JP-A- 2001 082 793
- JP-A- 2001 194 000
- JP-A- 2001 286 542
- JP-A- 2002 115 889
- JP-A- 2002 213 791
- JP-U- 53 086 839

## Description

### Technical field

The present invention relates to an air conditioner that conditions intake air and that then sends it out into a room.

### Background art

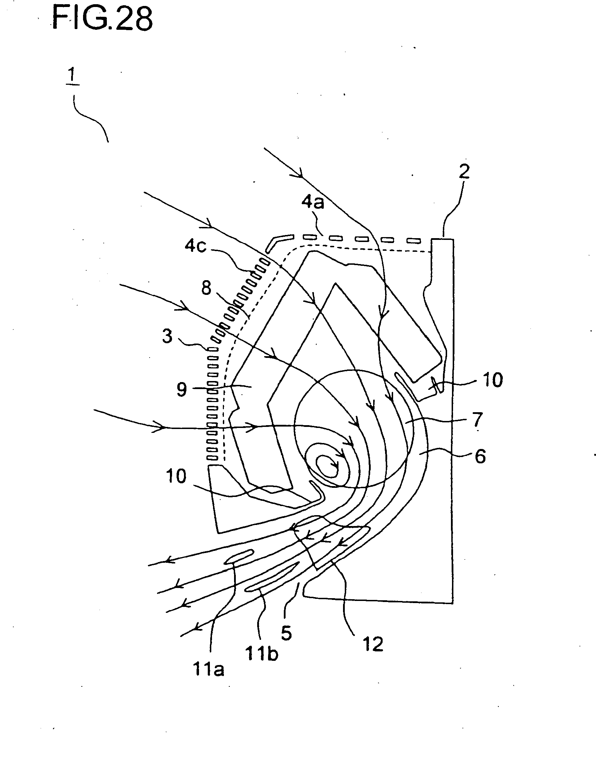

Fig. 28 is a schematic side sectional view showing the indoor unit of a conventional air conditioner. The indoor unit 1 has the main unit thereof held in a cabinet 2. To the cabinet 2 is detachably attached a front panel 3, which has intake ports 4a and 4c formed in the top and front faces thereof. The cabinet 2 has claws (not illustrated) formed on the rear face thereof. The cabinet 2 is supported on a wall with those claws engaged with a fitting plate fitted on the wall.

In the gap between the lower end of the front panel 3 and the lower end of the cabinet 2, a blow-out port 5 is formed that is substantially rectangular in shape and that extends in the direction of the width of the indoor unit 1. Inside the indoor unit 1, an air blow passage 6 is formed that connects the intake ports 4a and 4c to the blow-out port 5. Inside the air blow passage 6, a blower fan 7 is disposed that blows air out. Used as the blower fan 7 is, for example, a cross-flow fan.

In a position facing the front panel 3, an air filter 8 is provided that collects and removes dust contained in the air sucked in through the intake ports 4a and 4c. In the air blow passage 6, between the blower fan 7 and the air filter 8, an indoor heat exchanger 9 is disposed.

The indoor heat exchanger 9 is connected to a compressor (not illustrated) disposed outdoors. As the compressor is driven, a refrigeration cycle is run. As the refrigeration cycle is run, in cooling operation, the indoor heat exchanger 9 is cooled to a temperature lower than the ambient temperature; in heating operation, the indoor heat exchanger 9 is heated to a temperature higher than the ambient temperature.

Below a front and a rear portion of the indoor heat exchanger 9, drain pans 10 are disposed. The drain pans 10 collect dew that drips from the indoor heat exchanger 9 during cooling or dehumidifying operation. In the air blow passage 6, near the blow-out port 5, horizontal louvers 11a and 11b are provided. The horizontal louvers 11a and 11b permit the blow-out angle to be varied in the vertical direction between a substantially horizontal direction and a downward direction. Behind the horizontal louvers 11 a and 11b, vertical louvers 12 are provided that permit the blow-out angle to be varied in the right/left direction.

In the air conditioner constructed as described above, when the operation thereof is started, the blower fan 7 is driven to rotate. In addition, a refrigerant flows from the outdoor unit (not illustrated) to the indoor heat exchanger 9 to run a refrigeration cycle. As a result, air is sucked into the indoor unit 1 through the intake ports 4a and 4c, and dust contained in the air is removed by the air filter 8.

The air taken into the indoor unit 1 exchanges heat with the indoor heat exchanger 9, and is thereby cooled or heated. The air then passes through the air blow passage 6, then has the direction thereof regulated in the right/left and up/down directions by the vertical louvers 12 and the horizontal louvers 11a and 11b, and is then blown out, through the blow-out port 5, downward into the room.

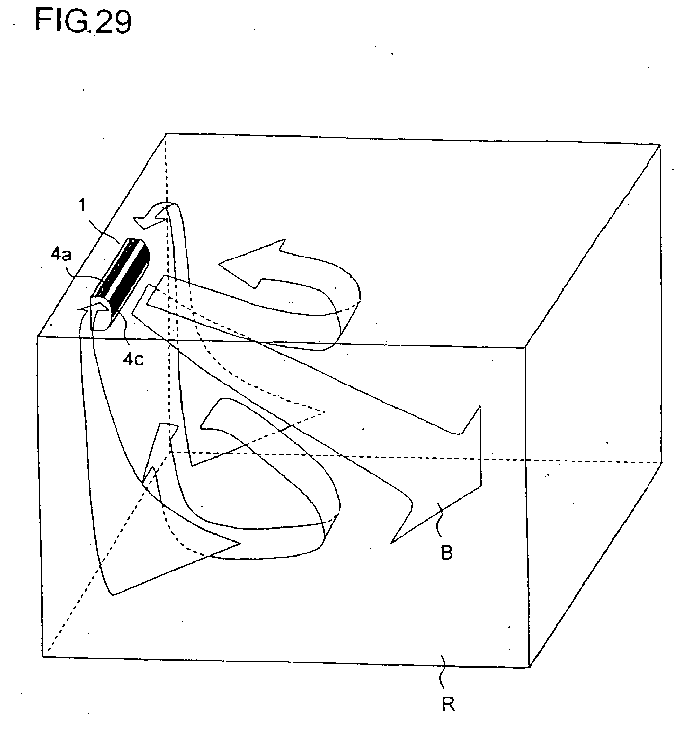

Immediately after the operation of the air conditioner is started, the air inside the room needs to be circulated quickly. For this purpose, the blower fan 7 is rotated at a high rate so that the air that has exchanged heat with the indoor heat exchanger 9 is vigorously blown out through the blow-out port 5. Fig. 29 shows the behavior of the air stream inside the room at this time. The air (B) blown out downward through the blow-out port 5 (see Fig. 28) circulates inside the room R along the path indicated by an arrow, and then returns to the intake ports 4a and 4c.

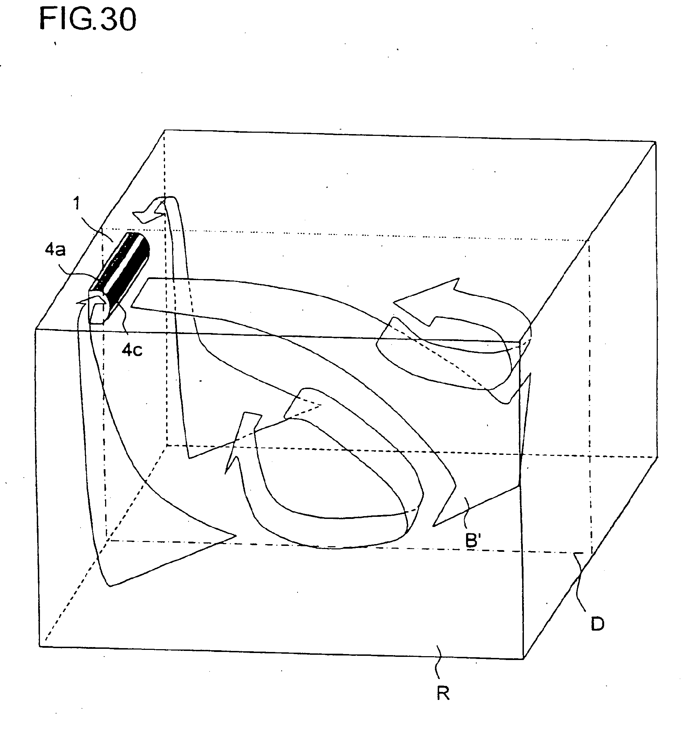

When the difference between the room temperature and the set temperature becomes small, the blower fan 7 is so controlled that the amount of wind is gradually decreased to gentle, and the horizontal louvers 11a and 11b are so controlled that the wind direction is substantially horizontal. Fig. 30 shows the behavior of the air stream inside the room at this time. The air (B') blown out in a substantially horizontal direction through the blow-out port 5 (see Fig. 28) circulates inside the room R along the path indicated by an arrow, and then returns to the intake ports 4a and 4c.

Some conventionally known air conditioners incorporate, inside the indoor unit 1 thereof, an ion generating device that generates ions. Such air conditioner blows out, together with conditioned air, ions through the blow-out port 5 to produce an air-purifying effect, achieved by disinfections or the like, and a relaxing effect.

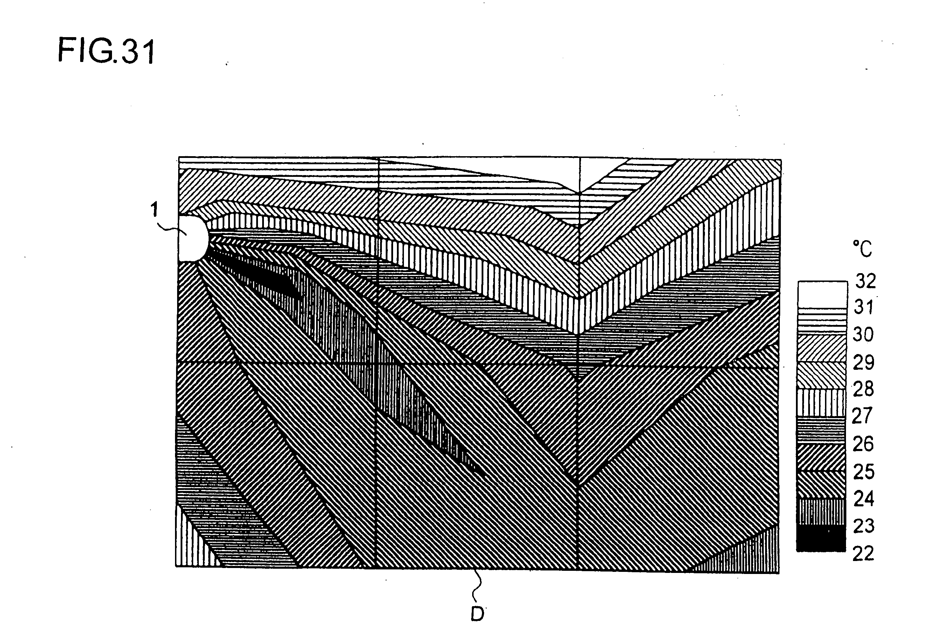

The conventional air conditioner mentioned above is usually installed in a position higher than the height of the user, and air is blown out through the blow-out port 5 in a direction somewhere between a substantially horizontal direction and a downward direction. Fig. 31 shows the temperature distribution inside the room as observed in a so-called stably cooled state, i.e., when, as a result of cooling operation performed in the room R shown in Figs. 29 and 30 described earlier, the set temperature (28°C) has largely been reached.

The room R is so wide as to occupy six thalami mats (2,400 mm high, 3,600 mm wide, and 2,400 mm deep). Measurements were taken at 48 points in total located at six by eight points 600 mm apart from one another in the height and width directions, respectively, on the central sectional plane of the room R indicated by dash-and-dot lines D in Fig. 30. Moreover, in the stably cooled state, the air stream has the following properties: the amount of wind is gentle, and the wind direction is substantially horizontal.

The figure shows the following. The cool air blown out of the indoor unit 1 has a greater specific gravity, and thus flows downward. As a result, a wind about 5°C cooler than the set temperature 28°C flows into a central portion of the room R. Thus, when air is kept being blown out after the set temperature has largely been reached, the user constantly receives a cool or warm air. This makes the user uncomfortable, and, in dehumidifying or cooling operation, may harm the user's health by locally lowering the user's body temperature. Moreover, the temperature in the room R tends to greatly vary from place to place.

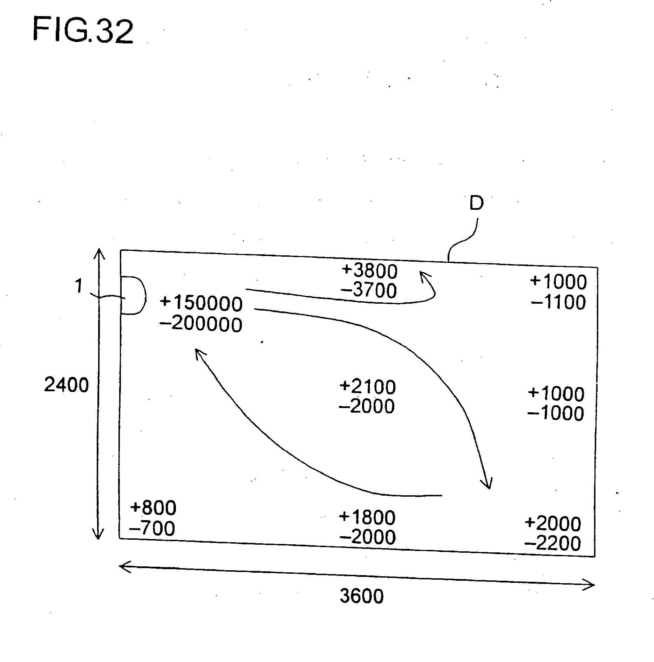

Fig. 32 shows the distribution of the ion concentration as observed when, along with conditioned air, ions are blown out into the room in the stably cooled state. The room R has the same dimensions as in Figs. 29 to 31 described above, and measurements are taken on the same sectional plane as in Fig. 31. The set temperature is 28°C, the amount of wind is gentle, and the wind direction is substantially horizontal. The arrows in the figure show the stream of air observed during the measurement.

Here, positive ions H⁺(H₂O)ₙ and negative ions O₂⁻(H₂O)ₙ are generated with an ion generating device, and are blown out through the blow-out port 5. The values shown in the figure represent the ion concentration (the number of ions per cm³) at different points, with the signs "+" and "-" indicating the positive and negative ions, respectively.

The figure shows the following. Since the stream of air blown out of the indoor unit 1 is weak, the ions do not reach the corners of the room R, resulting in low ion concentrations near the wall surface opposite the indoor unit 1 and in an area right below the indoor unit 1. That is, the ion concentration is lower in the corners of the room than elsewhere in the room, resulting in an unsatisfactory disinfecting or relaxing effect.

JP 10-019300 discloses an indoor machine for an air conditioner. An air outlet port is provided with two sets of upper and lower airflow deflecting plates, which are pivotal about pivoting axes in order to change the up-and-down sending directions of the air conditioned air.

### Disclosure of the invention

In view of the conventionally experienced problems discussed above, it is an object of the present invention to provide an air conditioner that achieves both comfort and safety to health in cooling or dehumidifying operation.

To achieve the above object, according to the present invention, the air conditioner that is fitted on a wall surface in a room includes all the features of claim 1.

With this construction, when the air conditioner is operated, the air taken in through the intake port provided in the air conditioner is conditioned, and is then blown out, for example, downward through the blow-out port. When the operation status of the air conditioner or the air conditioning status in the room changes, the air is now blown out, for example, upward through the blow-out port. The operation status of the air conditioner involves, for example, the direction of the wind direction plate that varies the direction of the downward wind, the temperature of the air blown out of the air conditioner, the temperature of the indoor heat exchanger provided in the indoor unit, the amount of wind blown out of the air conditioner, the operation frequency of the compressor that runs the refrigeration cycle, the current consumed by the air conditioner, and the amount of wind taken into the outdoor unit. On the other hand, the air conditioning status in the room involves the temperature in the room, the humidity in the room, the purity of the air in the room as recognized as the presence of odor-causing substances or the amount of dust there, and the ion concentration in the room.

According to the present invention, in the air conditioner constructed as described above, a wind guide plate is provided that directs the air in a desired direction by opening and closing the blow-out port, in which case the opening status of the wind guide plate is varied based on the operation status of the air conditioner or based on the air conditioning status in the room. With this construction, when the air conditioner is operated, the air taken in through the intake port provided in the air conditioner is conditioned, and the direction of the wind guide plate is set, for example, downward so that the conditioned air is blown out downward through the blow-out port. When the operation status of the air conditioner or the air conditioning status in the room changes, the direction of the wind guide plate is changed to upward so that the conditioned air is now blown out upward through the blow-out port.

In a case where the wind guide plate is provided in an upper portion of the blow-out port and the wind direction plate is provided in a lower portion of the blow-out port, when the wind guide plate is closed, the conditioned air is blown out downward. Based on the operation status of the air conditioner, when the wind guide plate is opened, the conditioned air is blown out downward and upward; when the wind direction plate is closed, the conditioned air is blown out upward.

According to the present invention, in any of the air conditioners constructed as described above, the direction of the wind guide plate can be varied according to an instruction from the user. With this construction, regardless of the operation status, the direction in which the conditioned air is blown out can be varied according to an instruction from the user.

According to the present invention, in any of the air conditioners constructed as described above, the direction of the wind guide plate can be varied according to the operation mode selected according to an instruction from the user. With this construction, when the user selects an operation mode, such as heating or cooling, the direction of the wind guide plate is set to the one that suits the operation mode.

According to the present invention, in any of the air conditioners constructed as described above, inhibiting means is provided for inhibiting the blowing-out of the air in the upward direction according to an instruction from the user. With this construction, when the user enables the inhibiting means, the air is not blown out upward even when the operation status or the air conditioning status in the room changes.

### Brief description of drawings

Fig. 1 is a schematic side sectional view showing the indoor unit of the air conditioner of a first embodiment of the invention.
Fig. 2 is a schematic side sectional view showing a portion around the blow-out port of the indoor unit of the air conditioner of the first embodiment.
Fig. 3 is a circuit diagram showing the refrigeration cycle of the air conditioner of the first embodiment.
Fig. 4 is a block diagram showing the configuration of the air conditioner of the first embodiment.
Fig. 5 is a block diagram showing the configuration of the controller of the air conditioner of the first embodiment.
Fig. 6 is a perspective view showing the behavior of the air stream blown out of the indoor unit of the air conditioner of the first embodiment.
Fig. 7 is a schematic side sectional view showing the operation of the indoor unit of the air conditioner of the first embodiment.
Fig. 8 is a perspective view showing the behavior of the air stream blown out of the indoor unit of the air conditioner of the first embodiment.
Fig. 9 is a diagram showing the temperature distribution as observed on the central sectional plane of the room when the air conditioner of the first embodiment is operating.
Fig. 10 is a diagram showing the ion concentration distribution as observed on the central sectional plane of the room when the air conditioner of the first embodiment is operating.
Fig. 11 is a schematic side sectional view showing how the direction of the wind guide plate is varied in the indoor unit of the air conditioner of the first embodiment.
Fig. 12 is a schematic side sectional view showing the operation of the indoor unit of the air conditioner of the first embodiment.
Fig. 13 is a schematic side sectional view showing the indoor unit of the air conditioner of a second embodiment of the invention.
Fig. 14 is a schematic side sectional view showing a portion around the blow-out port of the indoor unit of the air conditioner of the second embodiment.
Fig. 15 is a schematic side sectional view showing the operation of the indoor unit of the air conditioner of the second embodiment.
Fig. 16 is a schematic side sectional view showing how the direction of the wind guide plate is varied in the indoor unit of the air conditioner of the second embodiment.
Fig. 17 is a schematic side sectional view showing the operation of the indoor unit of the air conditioner of the second embodiment.
Fig. 18 is a schematic side sectional view showing the indoor unit of the air conditioner of a third embodiment of the invention.
Fig. 19 is a schematic side sectional view showing the indoor unit of the air conditioner of a fourth embodiment of the invention.
Fig. 20 is a schematic side sectional view showing the indoor unit of the air conditioner of a fifth embodiment of the invention.
Fig. 21 is a schematic side sectional view showing the operation of the indoor unit of the air conditioner of the fifth embodiment.
Fig. 22 is a schematic side sectional view showing the indoor unit of the air conditioner of a sixth embodiment of the invention.
Fig. 23 is a schematic side sectional view showing the operation of the indoor unit of the air conditioner of the sixth embodiment.
Fig. 24 is a schematic side sectional view showing the indoor unit of the air conditioner of a seventh embodiment of the invention.
Fig. 25 is a schematic side sectional view showing the indoor unit of the air conditioner of an eighth embodiment of the invention.
Fig. 26 is a schematic side sectional view showing the indoor unit of the air conditioner of a ninth embodiment of the invention.
Fig. 27 is a schematic side sectional view showing the indoor unit of the air conditioner of a tenth embodiment of the invention.
Fig. 28 is a schematic side sectional view of an indoor unit of a conventional air conditioner.
Fig. 29 is a perspective view showing the behavior of the air stream blown out of the indoor unit of a conventional air conditioner.
Fig. 30 is a perspective view showing the behavior of the air stream blown out of the indoor unit of the conventional air conditioner.
Fig. 31 is a diagram showing the temperature distribution as observed on the central sectional plane of the room when the conventional air conditioner is operating.
Fig. 32 is a diagram showing the ion concentration distribution as observed on the central sectional plane of the room when the conventional air conditioner is operating.

### Best mode for carrying out the invention

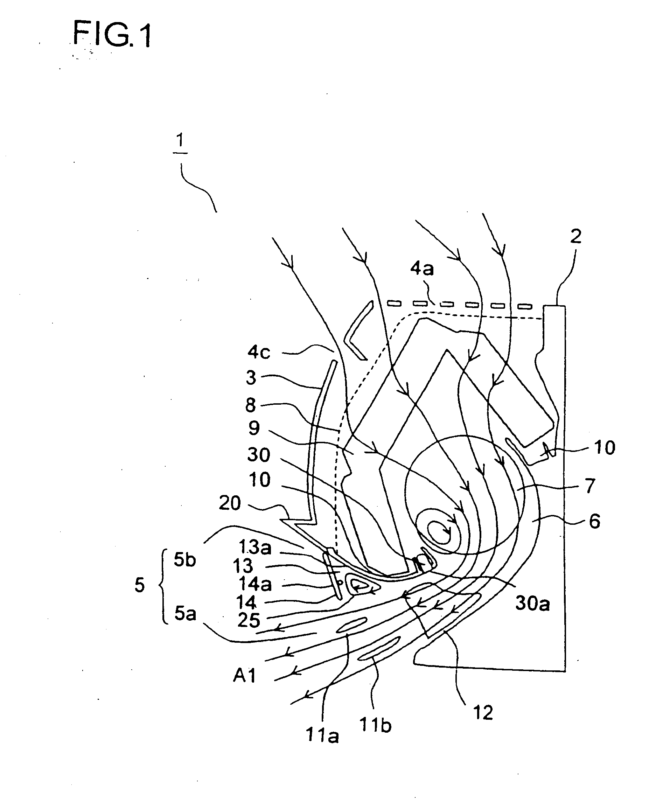

Hereinafter, embodiments of the present invention will be described with reference to the drawings. For the sake of convenience, such components as are found also in the conventional example shown in Figs. 28 to 32 are identified with common reference numerals. Fig. 1 is a schematic side sectional view showing the indoor unit 1 of the air conditioner of a first embodiment of the invention. The indoor unit 1 of the air conditioner has the main unit thereof held in a cabinet 2.

The cabinet 2 has claws (not illustrated) formed on the rear face thereof. The cabinet 2 is supported on a wall in a room with those claws engaged with a fitting plate fitted on the wall. To the front face of the cabinet 2, a front panel 3 is detachably attached so as to cover the main unit. In the top face of the cabinet 2, an intake port 4a is formed. Between the upper end of the front panel 3 and the cabinet 2, a gap is left that forms an intake port 4c.

In the gap between the lower end of the front panel 3 and the lower end of the cabinet 2, a blow-out port 5 is formed. The blow-out port 5 consists of a first and a second opening 5a and 5b, of which each extends in the direction of the width of the indoor unit 1 and is substantially rectangular in shape. There is no clear boundary between the first and second openings 5a and 5b, but, for the sake of convenience, a lower portion of the blow-out port 5 is referred to as the first opening 5a and an upper portion of the blow-out port 5 is referred to as the second opening 5b. Along the upper end of the second opening 5b, a wind guide portion 20 is formed integrally with the front panel 3 so as to protrude therefrom.

Inside the indoor unit 1, an air blow passage 6 is formed that connects the intake ports 4a and 4c to the blow-out port 5. Inside the air blow passage 6, in front of the cabinet 2, a blower fan 7 is disposed that blows air out. Used as the blower fan 7 is, for example, a cross-flow fan.

In a position facing the front panel 3, an air filter 8 is provided that collects and removes dust contained in the air sucked in through the intake ports 4a and 4c. In the air blow passage 6, between the blower fan 7 and the air filter 8, an indoor heat exchanger 9 is disposed. Between the front panel 3 and the indoor heat exchanger 9, a space is left so as to extend over a predetermined distance. The air taken in through the intake ports 4a and 4c passes through this space so as to make contact, over a large area, with the indoor heat exchanger 9.

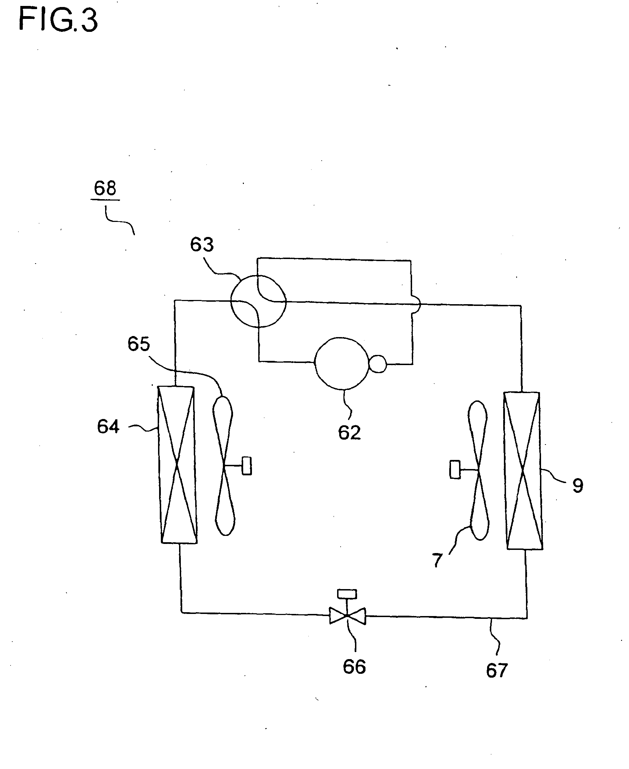

The indoor heat exchanger 9 is connected to a compressor 62 (see Fig 3). As the compressor is driven, a refrigeration cycle is run. As the refrigeration cycle is run, in cooling operation, the indoor heat exchanger 9 is cooled to a temperature lower than the ambient temperature; in heating operation, the indoor heat exchanger 9 is heated to a temperature higher than the ambient temperature. Between the indoor heat exchanger 9 and the air filter 8, a temperature sensor 61 (see Fig. 3) is provided that detects the temperature of the air sucked in. In a side portion of the indoor unit 1, a controller 60 (see Fig. 30) is provided that controls the driving of the air conditioner.

Below a front and a rear portion of the indoor heat exchanger 9, drain pans 10 are disposed that collect dew dripping from the indoor heat exchanger 9 during cooling or dehumidifying operation. The front-side drain pan 10 is fitted to the front panel 3, and the rear-side drain pan 10 is formed integrally with the cabinet 2.

In the front-side drain pan 10, an ion generating device 30 is provided, with a discharge surface 30a thereof facing the air blow passage 6. The ions generated from the discharge surface 30a of the ion generating device 30 are discharged into the air blow passage 6, and are then blown out through the blow-out port 5 into the room. The ion generating device 30 has a discharge electrode so as to generate, through corona discharge, positive ions consisting mainly of H⁺(H₂O)*ₙ* when the applied voltage is positive or negative ions consisting mainly of O₂⁻(H₂O)*ₘ* when the applied voltage is negative.

The ions H⁺(H₂O)*ₙ* and O₂⁻(H₂O)*ₘ* flock together on the surface of microbes, and enclose airborne germs, such as microbes, present in the air. As represented by formulae (1) to (3) below, those ions collide with one another to produce radicals, specifically [•OH] (hydroxyl radical) and H₂O₂ (hydrogen peroxide), on the surface of airborne germs, and thereby destroy them, achieving disinfections.

H⁺(H₂O)*ₙ* + O₂⁻(H₂O)*ₘ* → •OH + 1/2 O₂ + (*n* + *m*) H₂O (1)

H⁺(H₂O)*ₙ* + H⁺(H₂O)_{*n*'} + O₂⁻(H₂O)*ₘ* + O₂⁻(H₂O)_{*m*'} → 2•OH+O₂+(*n*+*n*'+*m*+*m*')H₂O (2)

H⁺(H₂O)*ₙ* + H⁺(H₂O)_{*n*'} + O₂⁻(H₂O)*ₘ* + O₂⁻(H₂O)_{*m*'} → H₂O₂ + O₂ + (*n* + *n*' + *m* + *m*') H₂O (3)

The operation of the ion generating device 30 can be switched, according to the purpose for which it is used, among the following three modes: a mode in which it generates more negative ions than positive ions, a mode in which the it generates more positive ions than negative ions, and a mode in which it generates approximately equal quantities of positive and negative ions.

In the air blow passage 6, near the first opening 5a of the blow-out port 5, horizontal louvers 11a and 11b (wind direction plates) are provided so as to face the outside. The horizontal louvers 11a and 11b permit the blow-out angle to be varied in the vertical direction between a substantially horizontal direction and a downward direction. Behind the horizontal louvers 11a and 11b, vertical louvers 12 are provided that permit the blow-out angle to be varied in the right/left direction.

The second opening 5b connects to the air blow passage 6 through a branch passage 13 that branches off the air blow passage 6 in an upward inclined direction. The air blow passage 6 and the branch passage 13 together form an air circulation passage through which air circulates. At the open end of the branch passage 13, a wind guide plate 14 is provided that has a rotary shaft 14a pivoted on the front panel 3. The wind guide plate 14 is treated with heat-insulating treatment to prevent condensation.

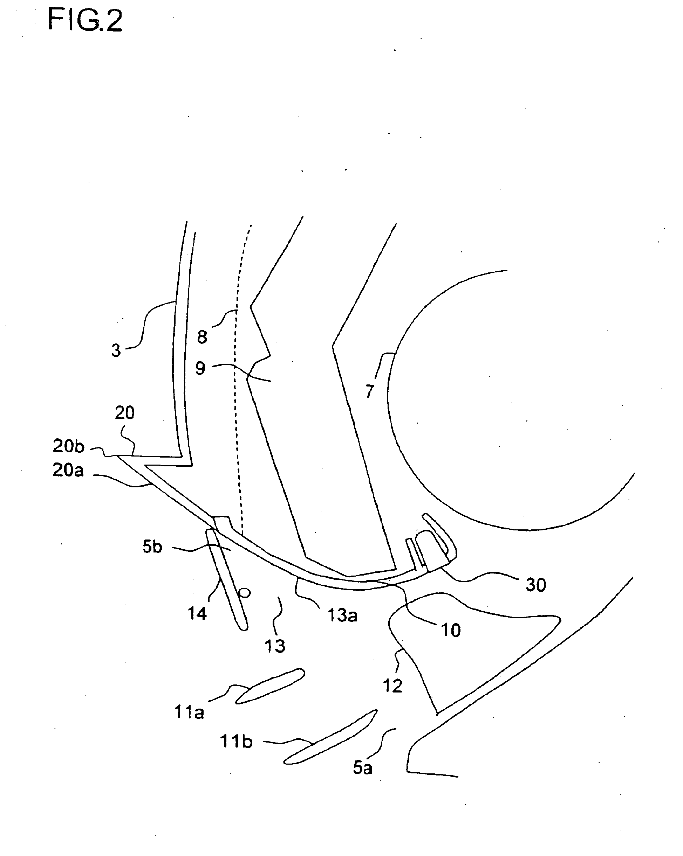

Fig. 2 is a sectional view showing the details of a portion around the blow-out port 5. The top wall surface 13a of the branch passage 13 is a surface that is so inclined as to rise forward. The bottom surface 20a of the wind guide portion 20 is formed along the top wall surface 13a of the branch passage 13, and smoothly guides the air blown out through the second opening 5b into the room.

Fig. 3 is a circuit diagram showing the refrigeration cycle of the air conditioner. The outdoor unit (not illustrated) to which the indoor unit 1 of the air conditioner is connected incorporates a compressor 62, a four-way switch valve 63, an outdoor heat exchanger 64, a blower fan 65, and a flow-rate control mechanism 66. One end of the compressor 62 is connected via the four-way switch valve 63 to the outdoor heat exchanger 64 by a refrigerant pipe 67. The other end of the compressor 62 is connected via the four-way switch valve 63 to the indoor heat exchanger 9 by the refrigerant pipe 67. The outdoor heat exchanger 64 and the indoor heat exchanger 9 are connected together via the flow-rate control mechanism 66 by the refrigerant pipe 67.

When cooling operation is started, the compressor 62 is driven, and the blower fan 7 is rotated. This runs a refrigeration cycle 68 in which a refrigerant flows from the compressor 62 via the four-way switch valve 63, the outdoor heat exchanger 64, the flow-rate control mechanism 66, the indoor heat exchanger 9, and the four-way switch valve 63 back to the compressor 62.

As the refrigeration cycle is run, in cooling operation, the indoor heat exchanger 9 is cooled to a temperature lower than the ambient temperature; in heating operation, the four-way switch valve 63 is switched so that the blower fan 65 is rotated and that the refrigerant is circulated in the reverse direction. As a result, the indoor heat exchanger 9 is heated to a temperature higher than the ambient temperature.

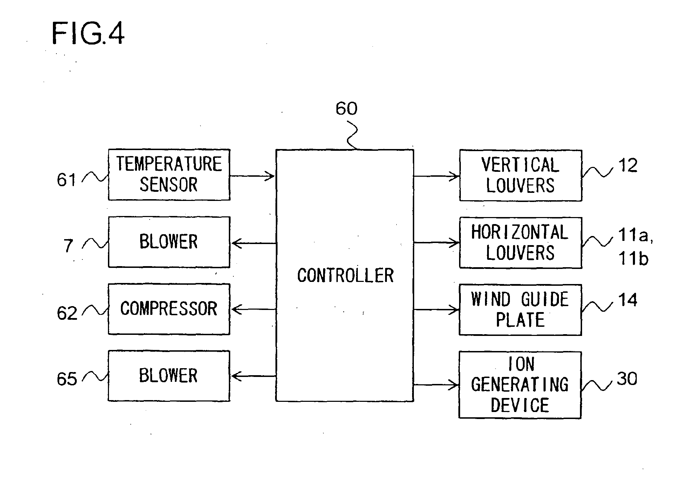

Fig. 4 is a block diagram showing the configuration of the air conditioner. The controller 60 is built with a microcomputer, and controls the driving of the blower fan 7, the compressor 62, the ion generating device 30, the vertical louvers 12, the horizontal louvers 11 a and 11b, and the wind guide plate 14 according to how the user operates and what is fed from the temperature sensor 61 that detects the temperature of the air sucked in.

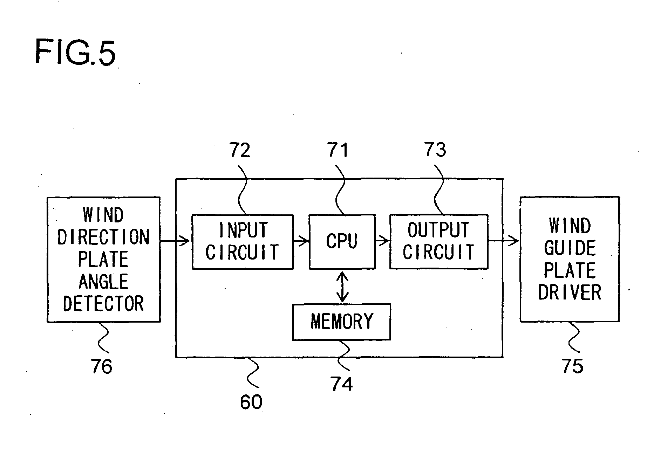

Fig. 5 is a block diagram showing the details of the configuration of the controller 60. The controller 60 includes a CPU 71 that performs various arithmetic operations. To the CPU 71 are connected an input circuit 72 that receives an input signal and an output circuit 73 that outputs the result of the operations performed by the CPU 71. A memory 74 is also provided in which the arithmetic operations to be performed by the CPU 71 are stored and in which the results of the operations are temporarily stored.

The input circuit 72 receives the signal detected by a wind direction plate angle detector 76 that detects the rotation angle of the horizontal louvers 1 1a and 11b (see Fig. 1). The output circuit 73 is connected to a wind guide plate driver 75 that is built with a motor for driving the wind guide plate 14 (see Fig. 1).

As will be described later, when the first opening 5a is open, the wind guide plate 14 closes the second opening 5b so that the conditioned air is blown out downward. When the second opening 5b is open, the horizontal louvers 11 a and 11b so rotate as to slightly open the first opening 5a so that the conditioned air is blown out upward.

Through the operation of a remote control unit (not illustrated), while the first opening 5a is open, the second opening 5b can be opened. In this case, the angle of the horizontal louvers 11a and 11b is detected by the wind direction plate angle detector 76. According to the angle detected by the wind direction plate angle detector 76, the controller 60 drives the wind guide plate driver 75.

The output of the light-receiving portion (not illustrated) that receives operation signals from the remote control unit is fed to the controller 60. Through predetermined operation of the remote control unit, regardless of the result detected by the wind direction plate angle detector 76, the wind guide plate 14 can be driven by the wind guide plate driver 75.

In the air conditioner configured as described above, when the operation thereof is started, the blower fan 7 is driven to rotate. In addition, the refrigerant from the outdoor unit (not illustrate) flows to the blower fan 7 to run the refrigeration cycle. As a result, air is sucked into the indoor unit 1 through the intake ports 4a and 4c, and the dust contained in the air is removed by the air filter 8.

The air taken into the indoor unit 1 exchanges heat with the indoor heat exchanger 9, and is thereby cooled or heated. The air then passes through the air blow passage 6, then has the direction thereof regulated by the vertical louvers 12 and the horizontal louvers 11a and 11b in the right/left and up/down directions, respectively, and is then blown out into the room in a substantially horizontal to downward direction through the first opening 5a of the blow-out port 5 as indicated by arrows A1. Meanwhile, the wind guide plate 14 is kept closed, and therefore no air is blown out through the second opening 5b.

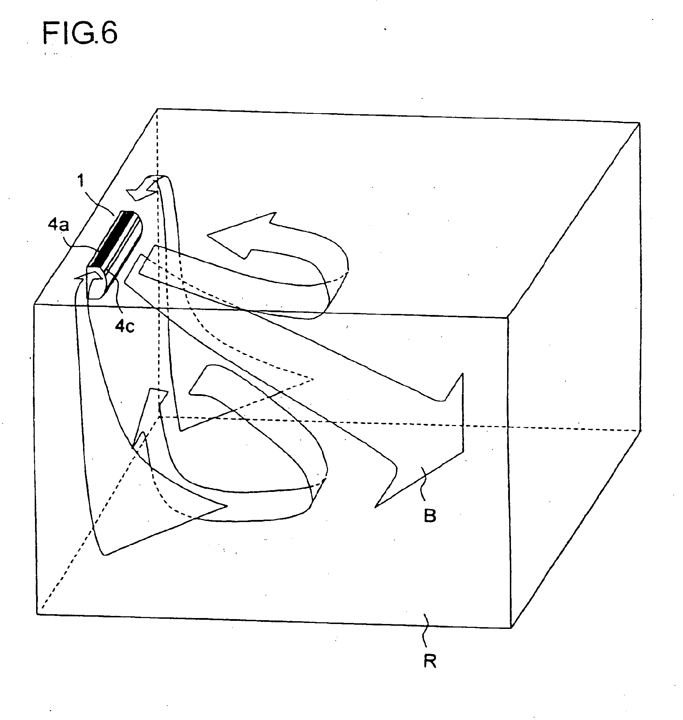

Immediately after the operation of the air conditioner is started, the air in the room needs to be circulated quickly. For this purpose, the amount of wind is set, for example, "strong" to rotate the blower fan 7 at a high rate so that the air that has exchanged heat with the indoor heat exchanger 9 is vigorously blown out through the blow-out port 5. Fig. 6 shows the behavior of the air stream in the entire room at this time. The air (B) that is blown out downward through the first opening 5a (see Fig. 1) circulates inside the room R along the path indicated by an arrow, and then returns to the intake ports 4a and 4c.

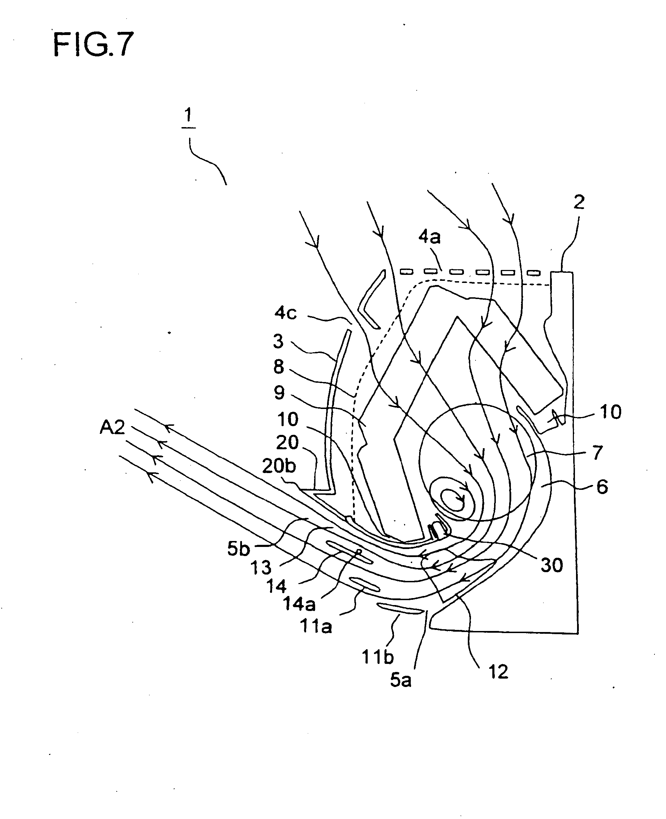

When the temperature sensor 61 detects that the difference between the room temperature and the set temperature has become small, the blower fan 7 is so controlled that the amount of wind is gradually decreased to, for example, "gentle." Moreover, as shown in Fig. 7, the horizontal louvers 11a and 11b are rotated so as to slightly open the first opening 5a, and the wind guide plate 14 is rotated so as to open the second opening 5b.

Thus, the air taken in through the intake ports 4a and 4c circulates through the air blow passage 6 and the branch passage 13, and is then blown out upward through the second opening 5b and through the gap between the horizontal louvers 11a and 11b. At this time, the air that circulates along the top wall surface 13a of the branch passage 13 smoothly flows along the bottom surface 20a of the wind guide portion 20, and the front edge 20b of the wind guide portion 20 kills the Coanda effect. Thus, the conditioned air is directed in a forward, upward direction as indicated by arrows A2 so as not to flow along the front panel 3.

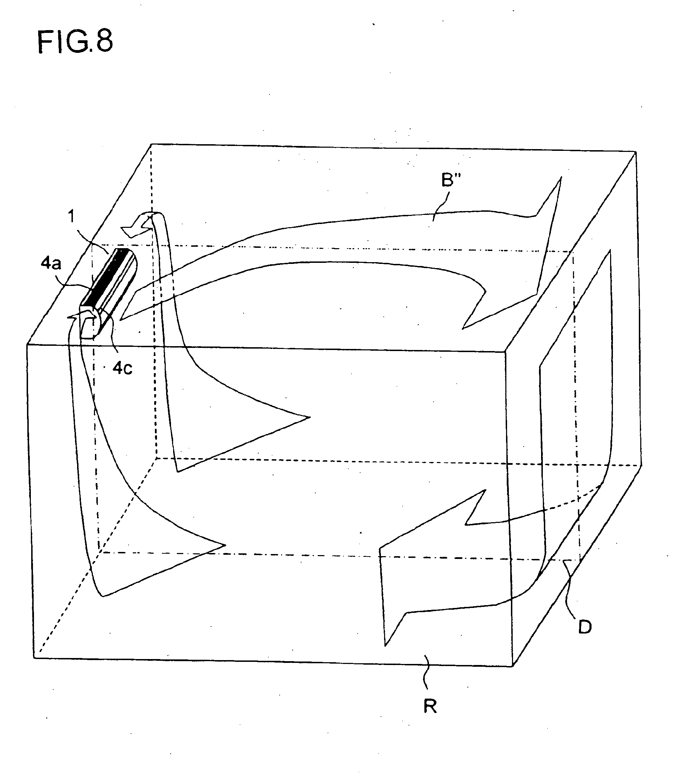

Fig. 8 shows the behavior of the air stream in the air at this time. The air (B") that is blown out in a forward, upward direction through the first and second openings 5a and 5b (see Fig. 7) circulates in the room R along the path indicated by an arrow, and then returns to the intake ports 4a and 4c. Thus, the user is prevented from constantly receiving cool or warm air, and thus the user is prevented from feeling uncomfortable. This contributes to enhanced comfort. Moreover, the user's body temperature is prevented from being locally lowered during cooling operation. This contributes to enhanced safety to health.

As a result of the horizontal louvers 11a and 11b being so controlled as to slightly open the first opening 5a, the air blown out through the first opening 5a is, by the Coanda effect, directed upward along the horizontal louvers 11a and 11b. At this time, the conditioned air passes along both sides of the horizontal louvers 11a and 11b, and therefore no temperature difference arises between the different sides thereof. This prevents condensation. In a case where the horizontal louvers 11a and 11b are treated with heat-insulating treatment, the first opening 5a may be closed.

Since the horizontal louvers rotate, they are so shaped as to avoid, when rotated, interference with the wall surface of the air blow passage 6. Thus, if the horizontal louvers are built as a single plate-shaped member, when the first opening 5a is closed, a wide gap is left, causing the air leaking through the gap to directly hit the user. To prevent this, it is preferable that, as in this embodiment, the horizontal louvers 11a and 11b be built as a plurality of plate-shaped member so that, when closed, they leave a small gap.

Moreover, arranging the plurality of horizontal louvers 11a and 11b at different angles makes it easy to direct the conditioned air upward along the individual horizontal louvers 11a and 11b and thereby reduce the air that leaks through the gap and is blown out downward. It is preferable that the wind guide plate 14 be given an appearance similar in color and shape to that of the horizontal louvers 11a and 11b so that the wind guide plate 14 appears to be part of the horizontal louvers. This contributes to an enhanced appearance.

On the other hand, thanks to the wind guide portion 20, the conditioned air blown out through the second opening 5b is blown out in a forward, upward direction in the form of a jet without flowing along the front panel 3. This prevents short-circuiting, i.e., the phenomenon in which the conditioned air flows back into the indoor unit 1 through the intake ports 4a and 4c.

In this way, it is possible to prevent the lowering of the cooling or heating efficiency of the air conditioner, and to prevent the increase of condensation on the surface of the front panel 3 and the freezing or growth of condensed water on the surface of the indoor heat exchanger 9. Thus, it is possible to prevent the discharge, into the room, of condensed water or water melted from frozen ice, and to prevent the deformation or destruction of the cabinet 2, the front panel 3, and the like under the pressure exerted by grown ice.

Furthermore, the lowering of the wind speed caused by the viscosity of air combined with the contact thereof with the front panel 3 is prevented. Thus, the air stream reaches every corner of the room, resulting in enhanced agitation efficiency in the room. In addition, since the wind guide portion 20 is provided at the lower end of the front panel 3 so as to protrude therefrom, the appearance of the indoor unit 1 is not spoilt, and the front edge 20b of the wind guide portion 20 kills the Coanda effect, preventing short-circuiting.

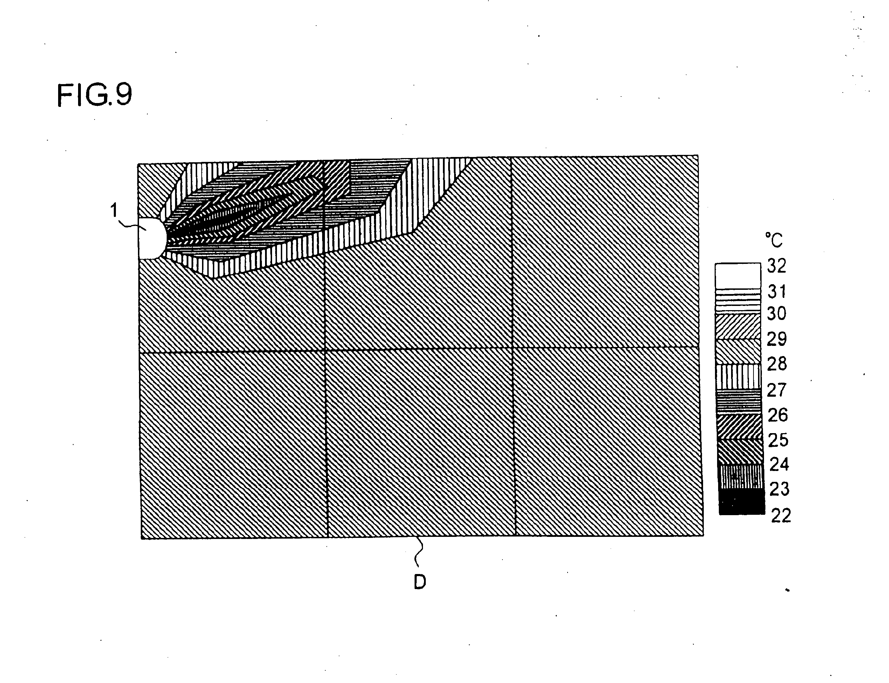

Fig. 9 shows the temperature distribution inside the room as observed in a so-called stably cooled state, i.e., when, as a result of cooling operation performed in the room R shown in Figs. 6 and 8, the set temperature (28°C) has largely been reached. As in the conventional example described earlier and shown in Figs. 29 to 32, the room R is so wide as to occupy six thalami mats (2,400 mm high, 3,600 mm wide, and 2,400 mm deep), and measurements are taken at 48 points in total located at six by eight points 600 mm apart from one another in the height and width directions, respectively, on the central sectional plane of the room R indicated by dash-and-dot lines D in Fig. 8. Moreover, in the stably cooled state, the air stream has the following properties: the amount of wind is gentle, and the wind direction is upward.

As Figs. 8 and 9 clearly show, the conditioned air that is blown out in a forward, upward direction through the first and second openings 5a and 5b of the indoor unit 1 is guided by the wind guide portion 20 to reach the ceiling of the room R. The air then flows along the ceiling surface, then along the wall surface opposite the indoor unit 1, then along the floor surface, and then along the wall surface on which the indoor unit 1 is fitted, until the air is eventually sucked into the indoor unit 1 through the intake ports 4a and 4c from both sides of the indoor unit 1.

In this way, the air stream achieves room-wide agitation of air, making the temperature distribution inside the room R uniform around the set temperature. That is, it is possible to obtain a comfortable space in which, except in an upper portion of the room R, the entire user living space is largely uniformly kept at the set temperature of 28°C and in which hardly any wind directly hits the user.

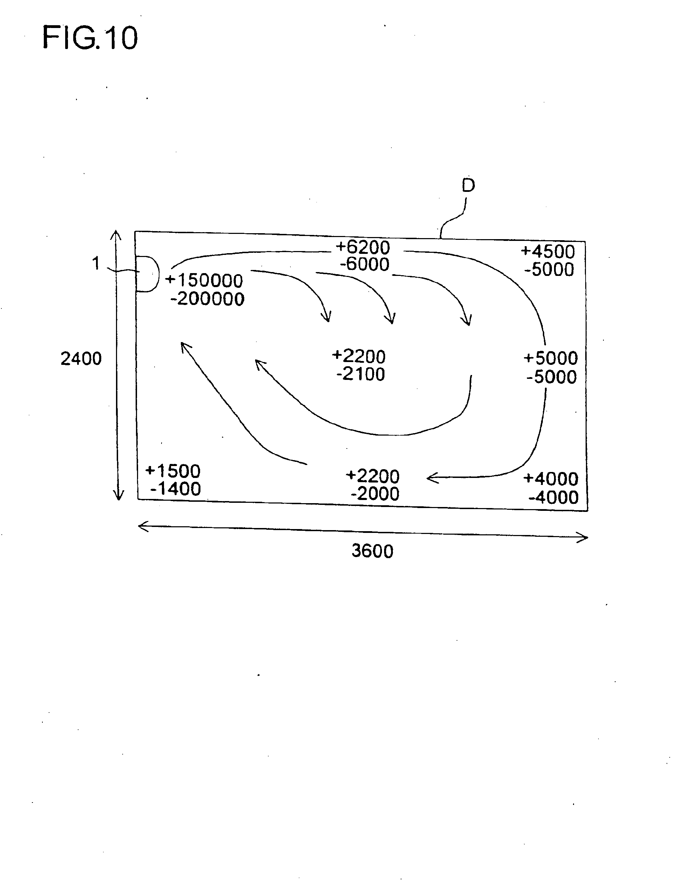

Fig. 10 shows the distribution of the ion concentration as observed when the ion generating device 30 is driven in the same room R as described above so that, along with conditioned air, ions are blown out into the room in the stably cooled state. Measurements are taken on the same sectional plane D (see Fig. 8) as in Fig. 9. The set temperature is 28°C, the amount of wind is gentle, and the wind direction is upward. The arrows in the figure show the behavior of the stream of air observed during the measurement. The values shown in the figure represent the ion concentration (the number of ions per cm³) at different points, with the signs "+" and "-" indicating the positive and negative ions, respectively.

The figure shows the following. As described above, thanks to the Coanda effect, along with the conditioned air, the ions flow along the ceiling surface, then along the wall surface opposite the indoor unit 1, then along the floor surface, and then along the wall surface on which the indoor unit 1 is fitted, until the ions are eventually sucked into the indoor unit 1 through the intake ports 4a and 4c from both sides of the indoor unit 1. Thus, the air stream quickly reaches corner portions of the room R. Thus, it is possible to make the ion concentration in corner portions of the room R higher than conventionally achieved. In general, air tends to stagnate in corner portions of a room, resulting in lower air purifying performance with the conventional technology. With the above-described effect, however, it is possible to greatly enhance the air purifying performance in corner portions of a room.

By making the ion generating device 30 generate and discharge more negative ions than positive ions into the room, it is possible to obtain a relaxing effect attributable to negative ions. Even in this case, it is possible to obtain a uniform ion concentration as described above.

It is also possible to spread ions over the entire room by alternately using the air stream that is blown out in a forward, upward direction through the second opening 5b of the blow-out port 5 of the indoor unit 1 and the air stream that is blown out in a forward, downward direction through the first opening 5a of the blow-out port 5. This makes it possible to increase the ion concentration in corner portions of the room, and to discharge ions to a substantially central portion of the room. In this way, it is possible to increase the ion concentration in the room as a whole, and to make the ion concentration in the room more uniform.

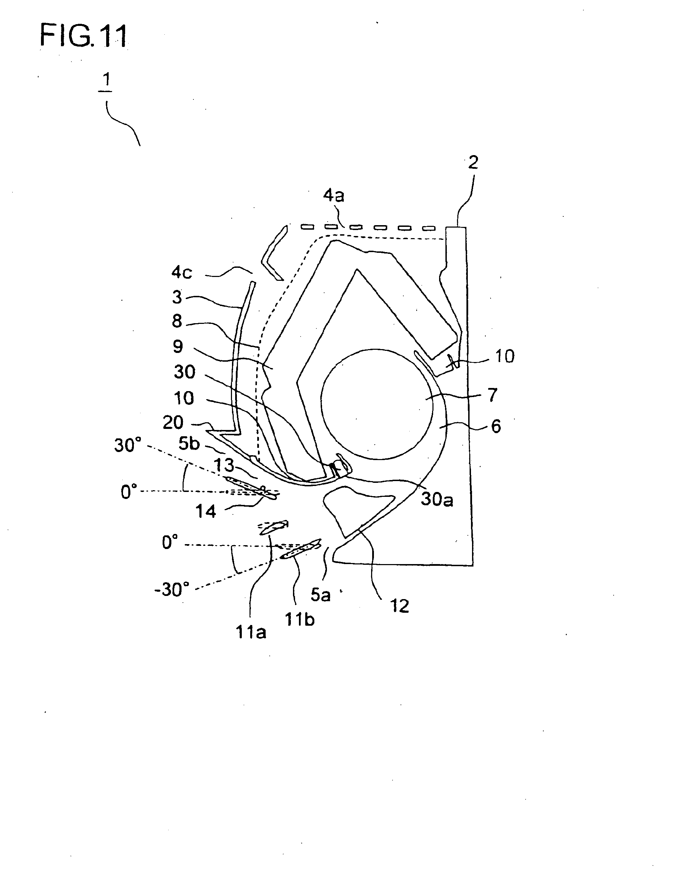

Moreover, as described earlier, through the operation of the remote control unit, while the first opening 5a is open, the second opening 5b can be opened. At this time, as shown in Fig. 11, if, for example, the inclination angle of the horizontal louvers 11a and 11b is 0° relative to the horizontal direction, the controller 60 so controls that the wind guide plate 14 is set at +30°. This permits the conditioned air to be blown out in a substantially horizontal direction through the first opening 5a and upward through the second opening 5b.

When the inclination angle of the horizontal louvers 11a and 11b is -30° relative to the horizontal direction, the controller 60 so controls that the wind guide plate 14 is set at 0°. This permits the conditioned air to be blown out downward through the first opening 5a and in a substantially horizontal direction through the second opening 5b. Likewise, when the inclination angle of the horizontal louvers 11a and 11b is -10° and -20°, the wind guide plate 14 is set at +20° and +10°, respectively.

Thus, even when the conditioned air is vigorously blown out downward through the first opening 5a, the conditioned air is also blown out in a substantially horizontal to upward direction through the second opening 5b. This makes it possible to quickly cool or heat the room to every corner thereof.

As the inclination angle of the horizontal louvers 11a and 11b becomes closer to horizontal, the inclination of the wind guide plate 14 becomes more upward so that the conditioned air is blown out in a frontward, upward direction through the blow-out port 5. The air then returns to the intake ports 4a and 4c located above the blow-out port 5, with the result that air circulates in an upper portion of the room. This makes it possible to reduce the amount of conditioned air that circulates in a lower portion of the room. Thus, by setting the horizontal louvers 11a and 11b at a desired angle, it is possible to vary the circulation pattern of the air inside the room to suit the user's intended purpose, and thereby to obtain enhanced comfort.

When a predetermined operation signal is transmitted from the remote control unit to the light-receiving portion, regardless of the angle of the horizontal louvers 11a and 11b, the wind guide plate 14 is set at the desired angle. For example, if the instruction from the user is "wind direction 1," the controller 60 so controls that the wind guide plate 14 is set at +30°; if the instruction from the user is "wind direction 2," the controller 60 so controls that the wind guide plate 14 is set at +20°; if the instruction from the user is "wind direction 3," the controller 60 so controls that the wind guide plate 14 is set at 0°. In this way, it is possible to set the wind direction to suit the user's preference.

If the operation mode selected by the user is "cooling with powerful wind" or "heating with mild wind," the controller 60 so controls that the wind guide plate 14 is set at 0°. If the operation mode selected by the user is "cooling with mild wind," "heating with gentle wind," "disinfections" with ions, "deodorization" with the later-described deodorizing device, "air purification" with the later-described odor sensor and dust sensor, or the like, the wind guide plate 14 is set at +20°. If the operation mode selected by the user is "cooling with gentle wind" or "dehumidification," the wind guide plate 14 is set at +30°. If the operation mode selected by the user is "heating with powerful wind," the wind guide plate 14 is located in such a position as to cover the second opening 5b.

In this way, it is possible to set the wind direction that best suits the operation mode selected by the user so that part of the conditioned air with a higher or lower blow-out temperature is blown out more upward. This makes it possible to reduce the hot or cold air that hits the user, and thereby to further reduce the discomfort felt by the user.

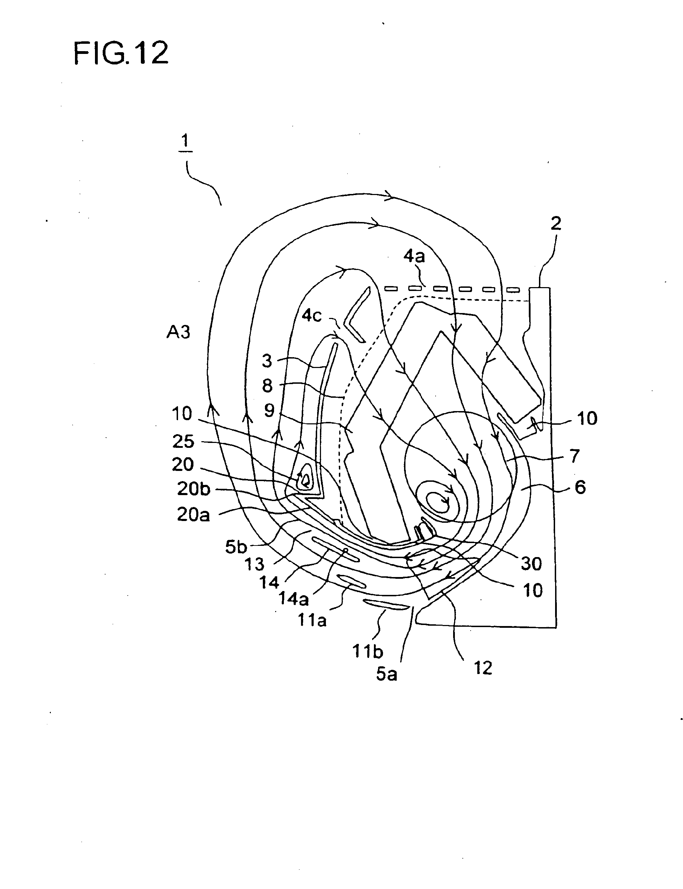

When the amount of wind blown out through the second opening 5b is made extremely small, the front edge 20b of the wind guide portion 20 can no longer kill the Coanda effect. As a result, for example, when the amount of wind blown out is set weaker than "gentle," such as "very gentle," as shown in Fig. 12, a whirlpool 25 is produced above the wind guide portion 20, and in addition the conditioned air that is blown out upward through the second opening 5b is sucked in through the intake ports 4a and 4c as indicated by arrows A3. In this way, it is possible to forcibly cause short-circuiting.

This permits positive and negative ions to circulate through the interior of the indoor unit 1 and thereby disinfect the interior of the indoor unit 1, achieving the purification of the indoor unit 1. At this time, if the temperature of the conditioned air is low, condensation or freezing of condensed water results, leading to damage caused by the splashing of condensed water or the pressure exerted by grown ice. To prevent this, it is preferable to set the temperature higher than in cooling operation.

Likewise, when dehumidifying operation is performed with the air conditioner, when the low-temperature air dehumidified through heat exchange with the indoor heat exchanger 9 is blown out upward in the form of gentle wind, the same effects as described above are obtained. Dehumidifying operation may be achieved by the use of a dehumidifying device of a reheating dry type that has an evaporator and a condenser provided within the indoor heat exchanger.

That is, the air cooled and dehumidified through heat exchange in the evaporator is then heated through heat exchange in the condenser, and is then blown out into the room. This makes it possible to perform dehumidification without lowering the room temperature. At this time, it is possible to prevent the air, of which the temperature has been raised in the condenser but still is lower than the body temperature, from constantly hitting the user, and to make the temperature distribution in the room uniform.

If there is a beam or obstacle on the ceiling near the indoor unit 1, in a forward, upward direction as viewed therefrom, the air that has blown out upward through the second opening 5b is bounced back and is taken in through the intake ports 4a and 4c, resulting in larger-scale short-circuiting. This can be dealt with by providing, on the remote control unit or on the indoor unit 1, a switch (inhibiting means) for inhibiting the opening of the wind guide plate 14 and the blowing-out of the air stream in a forward, upward direction. This makes it possible to control the wind direction in a way that suits the situation in which the air conditioner is used.

The top surface of the wind guide portion 20 and the top surface of the front-side drain pan 10 make contact with the air before passing through the indoor heat exchanger 9, whereas the bottom surface of the wind guide portion 20 and the bottom surface of the front-side drain pan 10 make contact with the conditioned air that has blown out through the blow-out port 5. Thus, the wind guide portion 20 and the front-side drain pan 10 are prone to condensation due to the temperature difference between the different sides thereof. To prevent such condensation, it is preferable that a heat-insulating member formed of resin foam or the like be firmly fitted to the wind guide portion 20 and the front-side drain pan 10. The wind guide portion 20 and the front-side drain pan 10 may be made hollow and be provided with a heat-insulating member formed of a layer of air or vacuum.

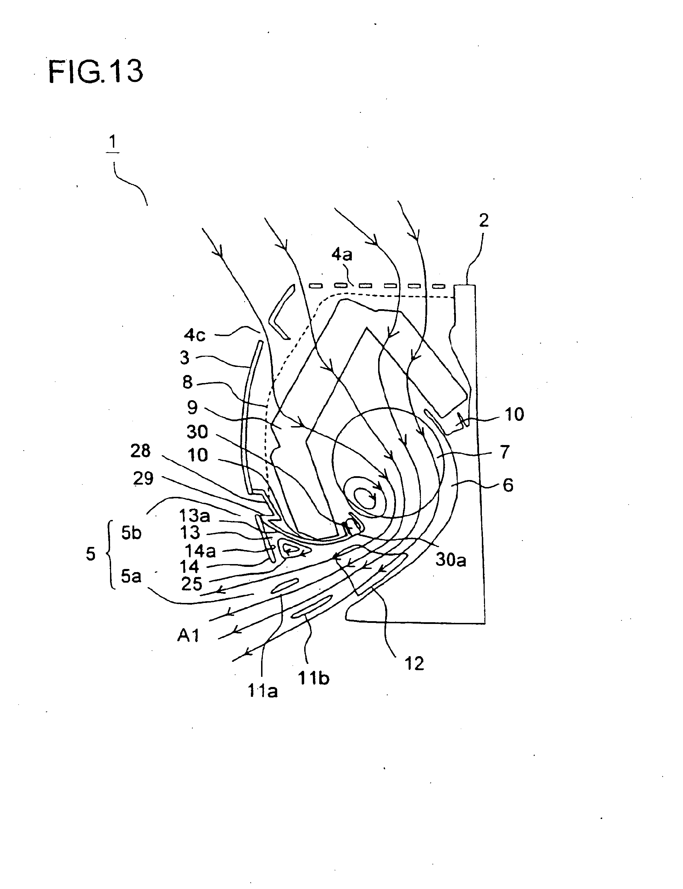

Fig. 13 is a schematic side sectional view showing the indoor unit of the air conditioner of a second embodiment of the invention. Such components as are found also in the first embodiment show in Figs. 1 to 12 described previously are identified with the common reference numerals. The differences from the first embodiment are that the top wall surface 13a does not protrude out of the blow-out port 5 and that, instead of the wind guide portion 20 (see Fig. 1), a substantially rectangular groove portion 28 that extends in the direction of the width of the indoor unit 1 is formed in the front panel 3. In other respects, this embodiment is the same as the first embodiment.

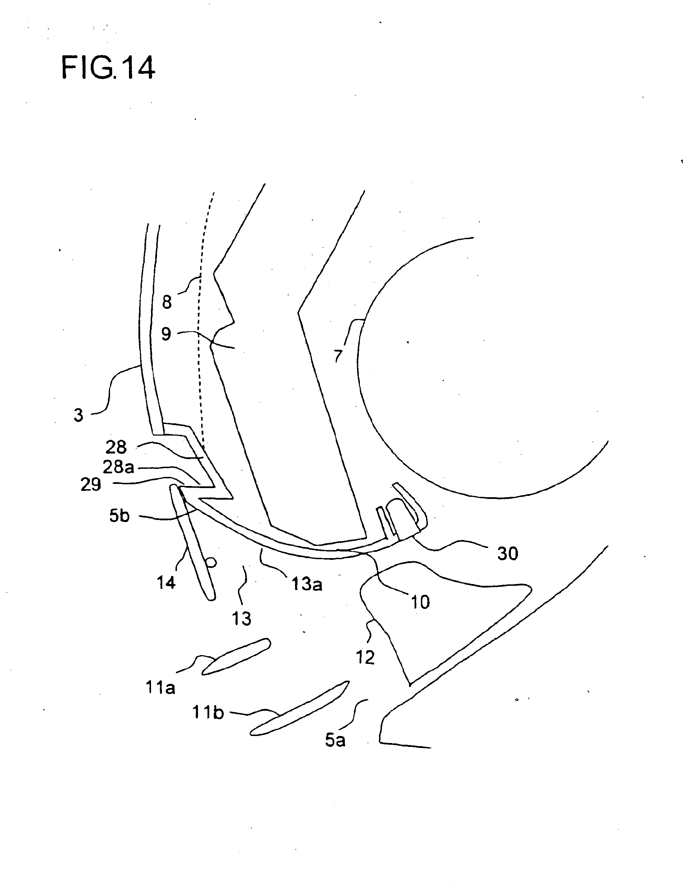

Fig. 14 shows the details of a portion around the groove portion 28. As in the first embodiment, the top wall surface 13a of the branch passage 13 is a surface that is so inclined as to rise forward. The groove portion 28 is provided between the front panel 3 and the top wall surface 13a, and the bottom surface 28a of the groove portion 28 and the top wall surface 13a of the branch passage 13 together form a pointed projecting portion 29.

In a similar manner as described previously, when the operation of the air conditioner is started, air in the room is sucked into the indoor unit 1 through the intake ports 4a and 4c. The air taken into the indoor unit 1 exchanges heat with the indoor heat exchanger 9, and is thereby cooled or heated. The air then passes through the air blow passage 6, then has the direction thereof regulated in the right/left and up/down directions by the vertical louvers 12 and the horizontal louvers 11a and 11b, respectively, and is then blown out into the room in a substantially horizontal to downward direction through the blow-out port 5 as indicated by arrows A1.

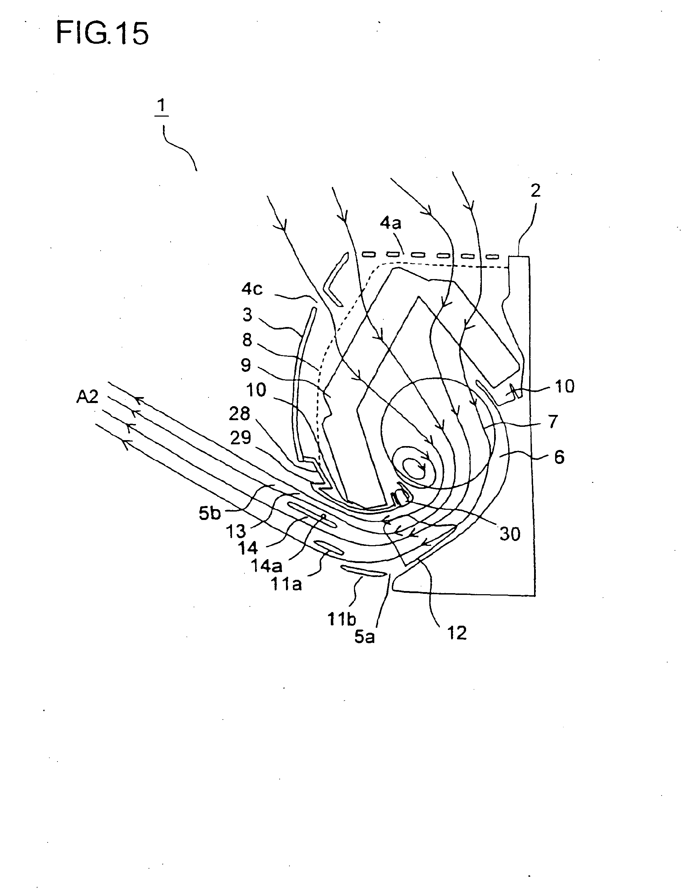

When the temperature sensor 61 (see Fig. 4) detects that the difference between the room temperature and the set temperature has become small, the blower fan 7 is so controlled that the amount of wind is gradually decreased to, for example, "gentle." Moreover, as shown in Fig. 15, the horizontal louvers 11a and 11b are rotated so as to slightly open the first opening 5a, and the wind guide plate 14 is rotated so as to open the second opening 5b.

Thus, the conditioned air circulating through the air blow passage 6 circulates through the branch passage 13, and is then blown out through the second opening 5b and through the gap between the horizontal louvers 11a and 11b. Here, the projecting portion 29 formed by the groove portion 28 kills the Coanda effect so that, as indicated by arrows A2, the air is blown out in a forward, upward direction in the form of a jet without flowing along the front panel 3.

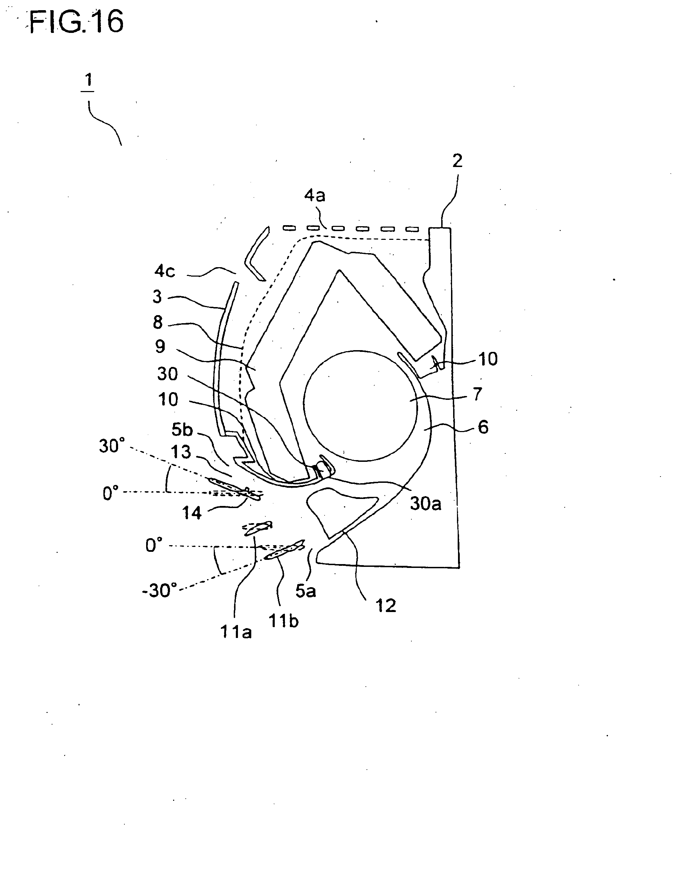

Through the operation of the remote control unit, while the first opening 5a is open, when the second opening 5b is opened, as shown in Fig. 16, if, for example, the inclination angle of the horizontal louvers 11a and 11b is 0° relative to the horizontal direction, the controller 60 so controls that the wind guide plate 14 is set at +30°. This permits the conditioned air to be blown out in a substantially horizontal direction through the first opening 5a and upward through the second opening 5b.

If the inclination angle of the horizontal louvers 11a and 11b is -30° relative to the horizontal direction, the controller 60 so controls that the wind guide plate 14 is set at 0°. This permits the conditioned air to be blown out downward through the first opening 5a and in a substantially horizontal direction through the second opening 5b. Likewise, when the inclination angle of the horizontal louvers 11a and 11b is -10° and -20°, the wind guide plate 14 is set at +20° and +10°, respectively.

Thus, as in the first embodiment, even when the conditioned air is vigorously blown out downward through the first opening 5a, the conditioned air is also blown out in a substantially horizontal to upward direction through the second opening 5b. This makes it possible to quickly cool or heat the room to every corner thereof. Moreover, as the inclination angle of the horizontal louvers 11a and 11b becomes closer to horizontal, the inclination of the wind guide plate 14 also becomes closer to horizontal, reducing the amount of conditioned air that circulates in a lower portion of the room. Thus, by setting the horizontal louvers 11a and 11b at a desired angle, it is possible to vary the circulation pattern of the air inside the room to suit the user's intended purpose, and thereby to obtain enhanced comfort.

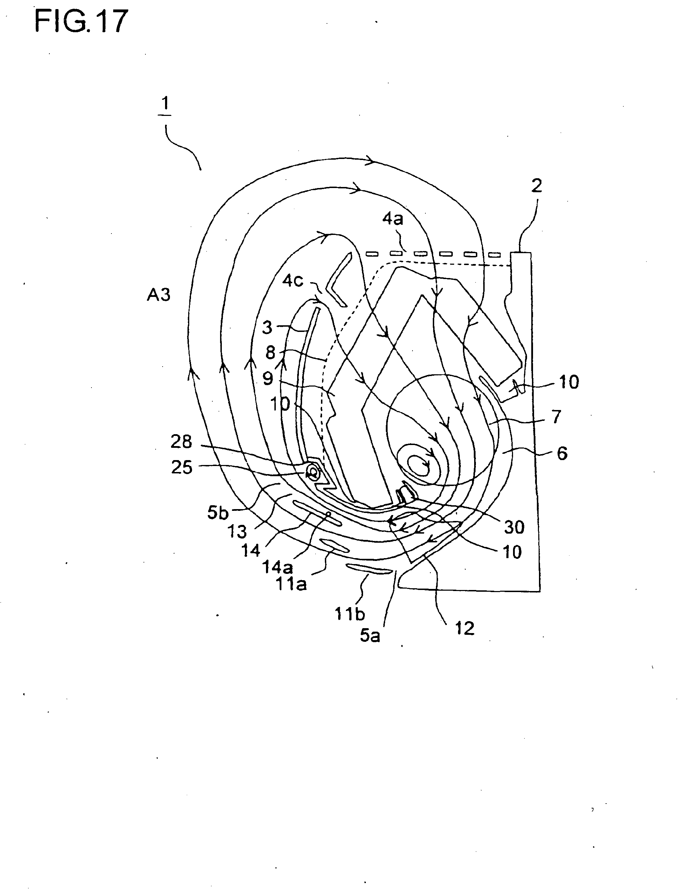

When the amount of wind blown out through the second opening 5b is made extremely small, the projecting portion 29 can no longer kill the Coanda effect. As a result, for example, when the amount of wind blown out is set weaker than "gentle," such as "very gentle," as shown in Fig. 17, a whirlpool 25 is produced within the groove portion 28, and in addition the conditioned air that is blown out upward through the second opening 5b is sucked in through the intake ports 4a and 4c as indicated by arrows A3. In this way, it is possible to forcibly cause short-circuiting. This permits positive and negative ions to circulate through the interior of the indoor unit 1 and thereby disinfect the interior of the indoor unit 1, achieving the purification of the indoor unit 1.

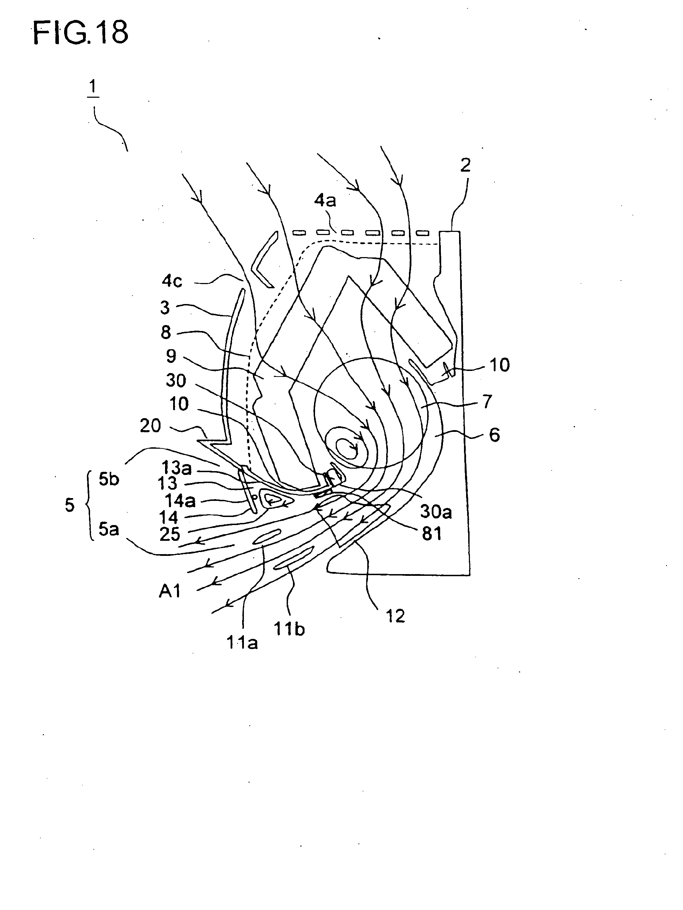

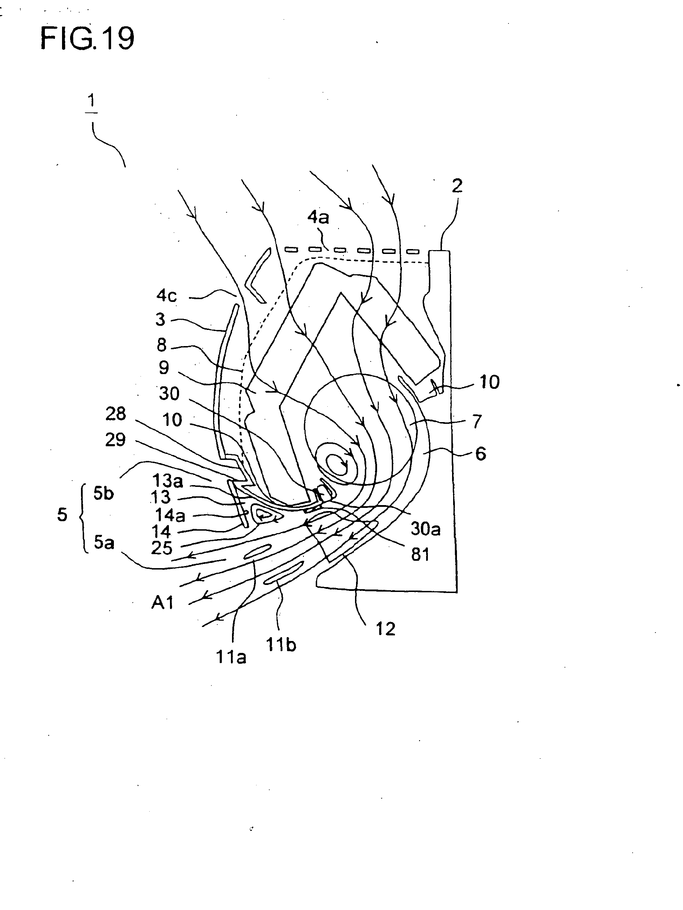

Figs. 18 and 19 are schematic side sectional views showing the indoor units of the air conditioners of a third and a fourth embodiment, respectively, of the invention. In these figures, such components as are found also in the first and second embodiments shown in Figs. 1 to 17 described previously are identified with common reference numerals. The third and fourth embodiments differ from the first and second embodiments in that a temperature sensor 81 for detecting the blow-out temperature of the conditioned air is additionally provided in the air blow passage 6.

Another difference is that, instead of the output of the wind direction plate angle detector 76 shown in Fig. 5 described previously, the output of the temperature sensor 81 is fed to the controller 60 so that, based on the result of the detection by the temperature sensor 81, the wind guide plate driver 75 is driven. In other respects, these embodiments are the same as the first and second embodiments.

In a similar manner as described previously, when the operation of the air conditioner is started, air in the room is sucked into the indoor unit 1 through the intake ports 4a and 4c. The air taken into the indoor unit 1 exchanges heat with the indoor heat exchanger 9, and is thereby cooled or heated. The air then passes through the air blow passage 6, then has the direction thereof regulated in the right/left and up/down directions by the vertical louvers 12 and the horizontal louvers 11a and 11b, respectively, and is then blown out into the room in a substantially horizontal to downward direction through the blow-out port 5 as indicated by arrows A1.

When the temperature sensor 61 (see Fig. 4) detects that the difference between the room temperature and the set temperature has become small, the blower fan 7 is so controlled that the amount of wind is gradually decreased to, for example, "gentle." Moreover, as shown in Fig. 7 or 15, the horizontal louvers 11a and 11b are rotated so as to slightly open the first opening 5a, and the wind guide plate 14 is rotated so as to open the second opening 5b.

Thus, the conditioned air circulating through the air blow passage 6 circulates through the branch passage 13, and is then blown out through the second opening 5b and through the gap between the horizontal louvers 11a and 11b. Here, the front edge 20b of the wind guide portion 20 or the projecting portion 29 kills the Coanda effect so that, as indicated by arrows A2 (see Figs. 7 or 15), the air is blown out in a forward, upward direction in the form of a jet without flowing along the front panel 3.

Through the operation of the remote control unit, while the first opening 5a is open, the second opening 5b is opened. At this time, if, for example, the blow-out temperature detected by the temperature sensor 81 is 10°C or lower, the controller 60 so controls that the wind guide plate 14 is set at +30°. If the blow-out temperature is in the range of 10°C to 15°C, the wind guide plate 14 is set at +20°, and, if the blow-out temperature is 15°C or higher, the wind guide plate 14 is set at 0°C.

Since the specific gravity of low-temperature air is greater than that of high-temperature air, varying the angle of the wind guide plate 14 according to the blow-out temperature permits part of the conditioned air with a lower blow-out temperature to be blown out more upward. This makes it possible to reduce the low-temperature air that hits the user and thereby to further reduce the discomfort felt by the user.

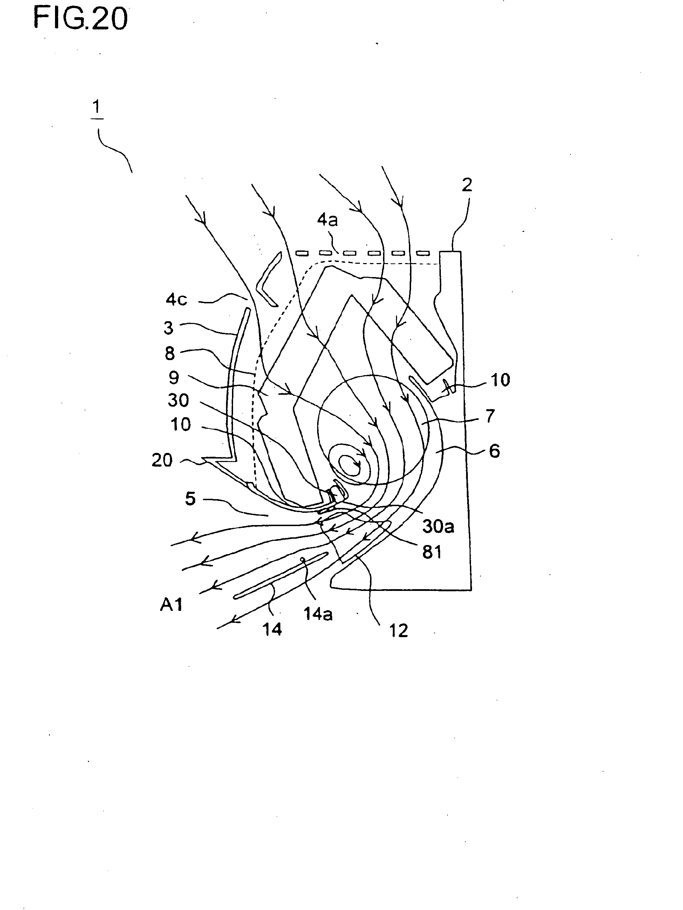

Fig. 20 is a schematic side sectional view showing the indoor unit of the air conditioner of a fifth embodiment of the invention. Such components as are found also in the third embodiment shown in Fig. 18 described previously are identified with common reference numerals. This embodiment differs from the second embodiment in that the horizontal louvers 11a and 11b (see Fig. 18) are omitted, and that the wind guide plate 14 can be rotated so as to be set at one of the following different positions: a position in which it closes the blow-out port 5, a position in which it permits the conditioned air to be blown out in a substantially horizontal to downward direction, a position in which it permits the conditioned air to be blown out in a forward, upward direction, and a position in which it forcibly causes short-circuiting. In other respects, this embodiment is the same as the third embodiment.

In a similar manner as described previously, when the operation of the air conditioner is started, air in the room is sucked into the indoor unit 1 through the intake ports 4a and 4c. The air taken into the indoor unit 1 exchanges heat with the indoor heat exchanger 9, and is thereby cooled or heated. The air then passes through the air blow passage 6, then has the direction thereof regulated in the right/left and up/down directions by the vertical louvers 12 and the wind guide plate 14, respectively, and is then blown out into the room in a substantially horizontal to downward direction through the blow-out port 5 as indicated by arrows A1.

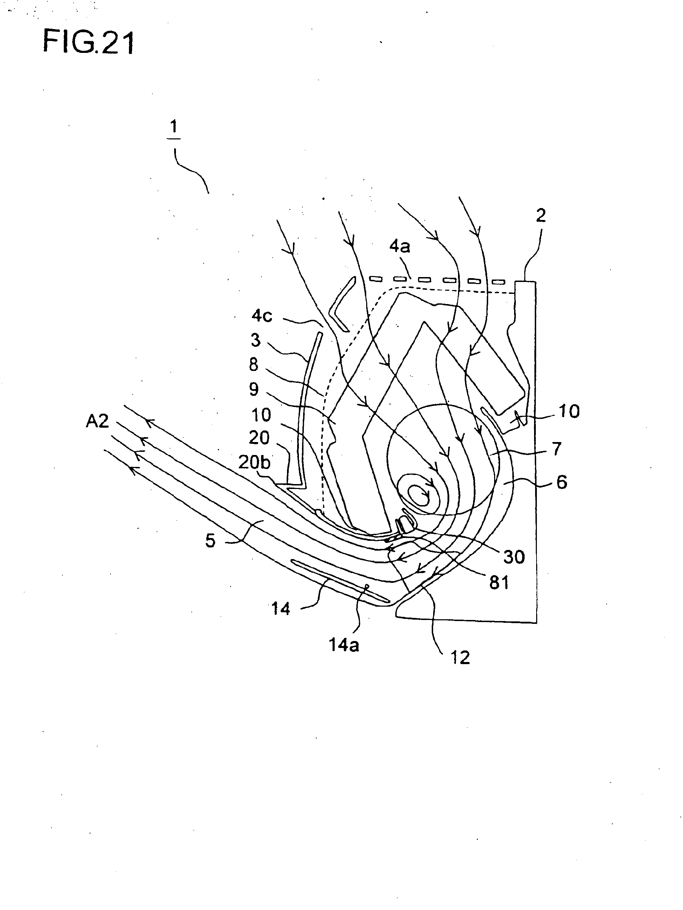

When the temperature sensor 61 (see Fig. 4) detects that the difference between the room temperature and the set temperature has become small, the blower fan 7 is so controlled that the amount of wind is gradually decreased to, for example, "gentle." Moreover, the wind guide plate 14 is rotated as shown in Fig. 21. Thus, the conditioned air circulating through the air blow passage 6 is blown out through the blow-out port 5 as shown in the figure. Here, the front edge 20b of the wind guide portion 20 kills the Coanda effect so that, as indicated by arrows A2, the air is blown out in a forward, upward direction in the form of a jet without flowing along the front panel 3. Thus, the same effects as obtained in the third embodiment are obtained.

Through the operation of the remote control unit, the angle at which the wind guide plate 14 is open can be varied. At this time, if, for example, the blow-out temperature detected by the temperature sensor 81 is 10°C or lower, the controller 60 so controls that the wind guide plate 14 is set at +30°. If the blow-out temperature is in the range of 10°C to 15°C, the wind guide plate 14 is set at +20°, and, if the blow-out temperature is 15°C or higher, the wind guide plate 14 is set at 0°C. Thus, as in the third embodiment, it is possible to reduce the low-temperature air that hits the user and thereby to further reduce the discomfort felt by the user.

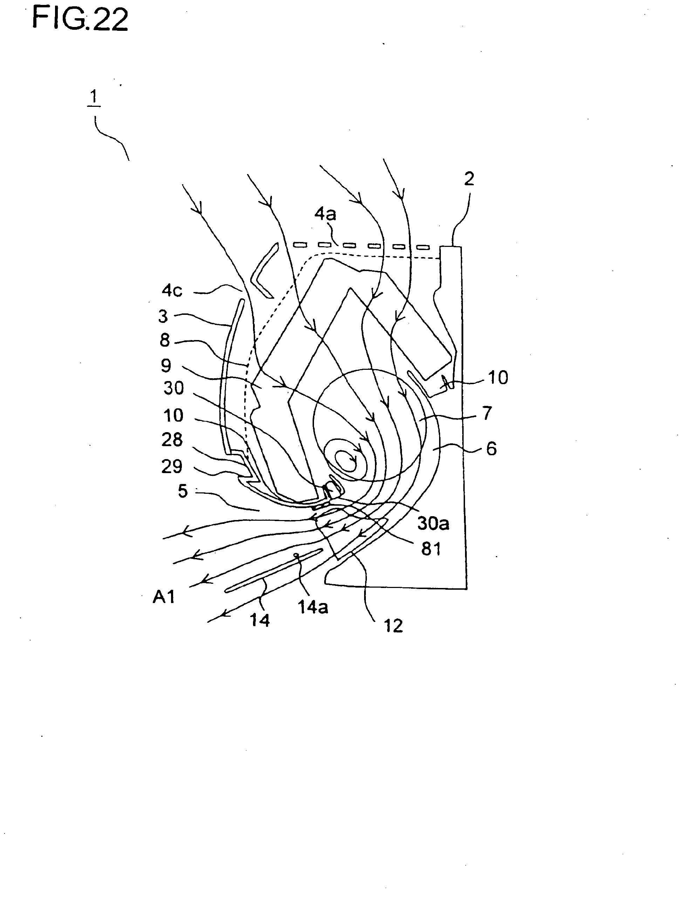

Fig. 22 is a schematic side sectional view showing the indoor unit of the air conditioner of a sixth embodiment of the invention. Such components as are found also in the fourth embodiment shown in Fig. 19 described previously are identified with common reference numerals. This embodiment differs from the fourth embodiment in that the horizontal louvers 11a and 11b (see Fig. 19) are omitted, and that the wind guide plate 14 can be rotated so as to be set at one of the following different positions: a position in which it closes the blow-out port 5, a position in which it permits the conditioned air to be blown out in a substantially horizontal to downward direction, a position in which it permits the conditioned air to be blown out in a forward, upward direction, and a position in which it forcibly causes short-circuiting. In other respects, this embodiment is the same as the fourth embodiment.

In a similar manner as described previously, when the operation of the air conditioner is started, air in the room is sucked into the indoor unit 1 through the intake ports 4a and 4c. The air taken into the indoor unit 1 exchanges heat with the indoor heat exchanger 9, and is thereby cooled or heated. The air then passes through the air blow passage 6, then has the direction thereof regulated in the right/left and up/down directions by the vertical louvers 12 and the wind guide plate 14, respectively, and is then blown out into the room in a substantially horizontal to downward direction through the blow-out port 5 as indicated by arrows A1.

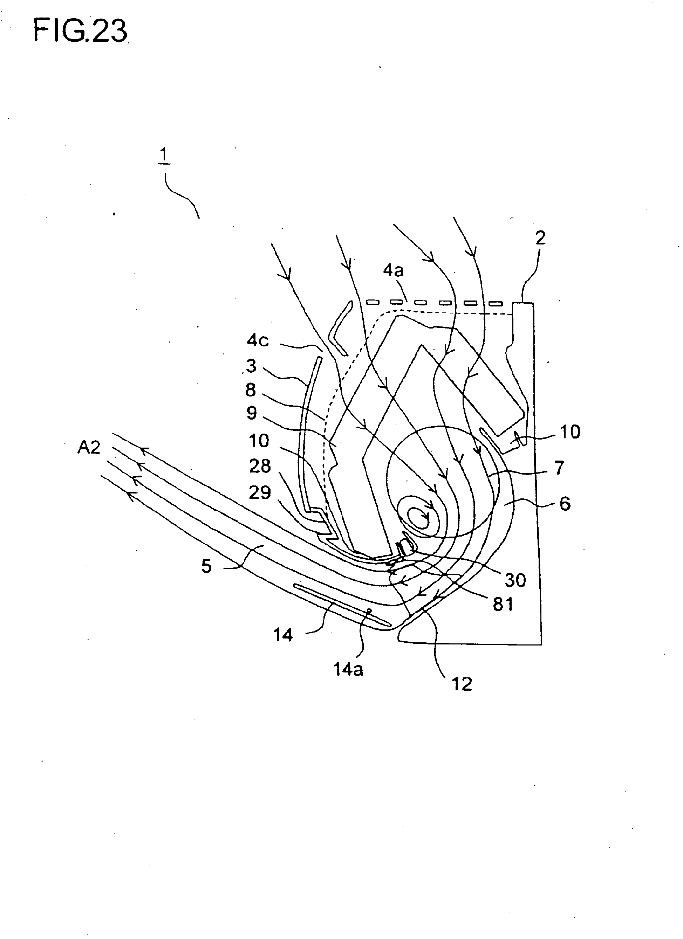

When the temperature sensor 61 (see Fig. 4) detects that the difference between the room temperature and the set temperature has become small, the blower fan 7 is so controlled that the amount of wind is gradually decreased to, for example, "gentle." Moreover, the wind guide plate 14 is rotated as shown in Fig. 23. Thus, the conditioned, air circulating through the air blow passage 6 is blown out through the blow-out port 5 as shown in the figure. Here, the projecting portion 29 kills the Coanda effect so that, as indicated by arrows A2, the air is blown out in a forward, upward direction in the form of a jet without flowing along the front panel 3. Thus, the same effects as obtained in the fourth embodiment are obtained.

Through the operation of the remote control unit, the angle at which the wind guide plate 14 is open can be varied. At this time, if, for example, the blow-out temperature detected by the temperature sensor 81 is 10°C or lower, the controller 60 so controls that the wind guide plate 14 is set at +30°. If the blow-out temperature is in the range of 10°C to 15°C, the wind guide plate 14 is set at +20°, and, if the blow-out temperature is 15°C or higher, the wind guide plate 14 is set at 0°C. Thus, as in the third embodiment, it is possible to reduce the low-temperature air that hits the user and thereby to further reduce the discomfort felt by the user.

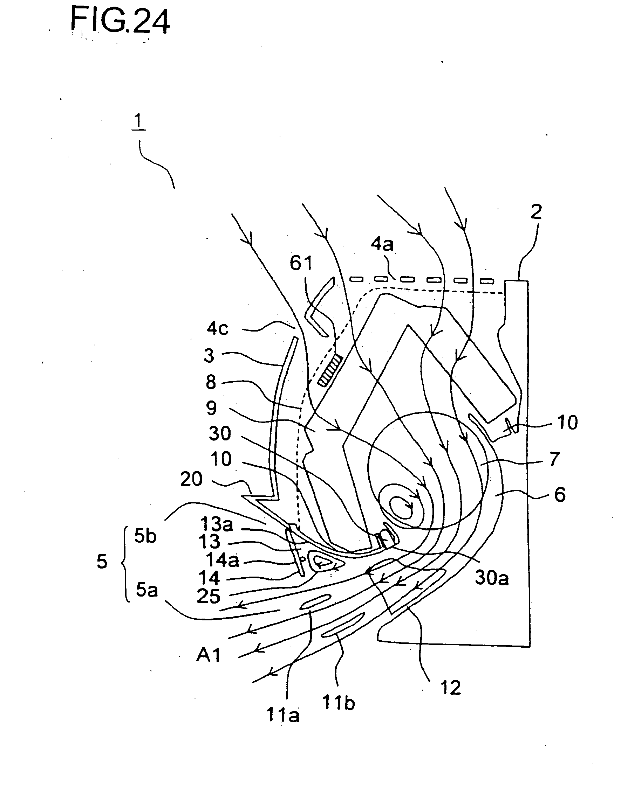

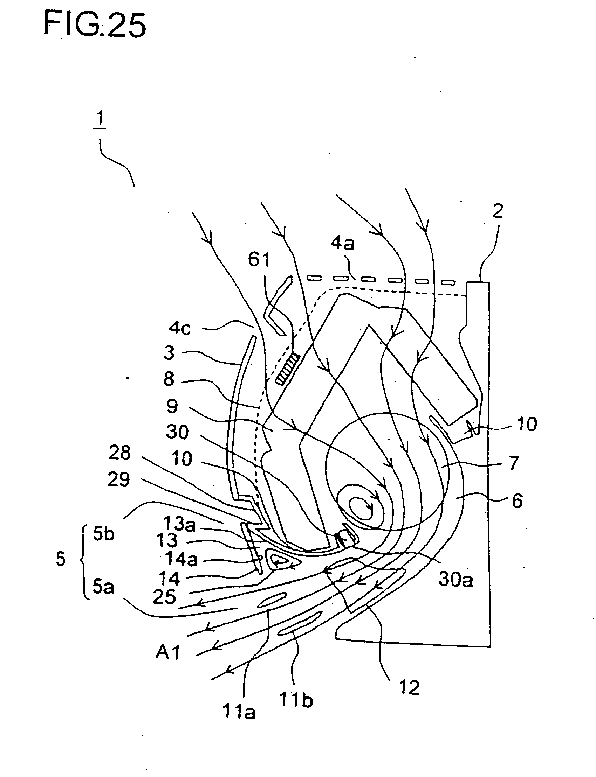

Figs. 24 and 25 are schematic side sectional views showing the indoor units of the air conditioners of a seventh and an eighth embodiment, respectively, of the invention. Such components as are found also in the first and second embodiments shown in Figs. 1 to 17 described previously are identified with common reference numerals. These embodiments differ from the first and second embodiments in that the wind direction plate angle detector 76 (see Fig. 5) is omitted.

Another difference is that the temperature sensor 61 is provided between the indoor heat exchanger 9 and the air filter 8, and, in Fig. 5, the output of the temperature sensor 61 is fed to the controller 60 so that, according to the result of the detection by the temperature sensor 61, the wind guide plate driver 75 is driven. In other respects, these embodiments are the same as the first and second embodiments.

In a similar manner as described previously, when the operation of the air conditioner is started, air in the room is sucked into the indoor unit 1 through the intake ports 4a and 4c. The air taken into the indoor unit 1 exchanges heat with the indoor heat exchanger 9, and is thereby cooled or heated. The air then passes through the air blow passage 6, then has the direction thereof regulated in the right/left and up/down directions by the vertical louvers 12 and the horizontal louvers 11a and 11b, respectively, and is then blown out into the room in a substantially horizontal to downward direction through the blow-out port 5 as indicated by arrows A1.

When the temperature sensor 61 detects that the difference between the room temperature and the set temperature has become small, the blower fan 7 is so controlled that the amount of wind is gradually decreased to, for example, "gentle." Moreover, as shown in Fig. 7 or 15, the horizontal louvers 11a and 11b are rotated so as to slightly open the first opening 5a, and the wind guide plate 14 is rotated so as to open the second opening 5b.

Thus, the conditioned air circulating through the air blow passage 6 circulates through the branch passage 13, and is then blown out through the second opening 5b and through the gap between the horizontal louvers 11a and 11b. Here, the front edge 20b of the wind guide portion 20 or the projecting portion 29 kills the Coanda effect so that, as indicated by arrows A2 (see Figs. 7 or 15), the air is blown out in a forward, upward direction in the form of a jet without flowing along the front panel 3. Thus, the same effects as obtained in the first and second embodiments are obtained.

Through the operation of the remote control unit, while the first opening 5a is open, the second opening 5b is opened. At this time, if, for example, the difference between the temperature of the intake air and the set temperature in cooling operation is 1°C or less, the controller 60 so controls that the wind guide plate 14 is set at +30°. If the difference between the temperature of the intake air and the set temperature is in the range from 1°C to 5°C, the wind guide plate 14 is set at +20°. If the difference between the temperature of the intake air and the set temperature is 5°C or more, the wind guide plate 14 is set at +0°. In this way, as in the first and second embodiments, it is possible to reduce the cold air that hits the user, and thereby to further reduce the discomfort felt by the user. Here, as in the fifth and sixth embodiments, the wind guide plate driver 75 may be driven based on the result of detection by the temperature sensor 61.

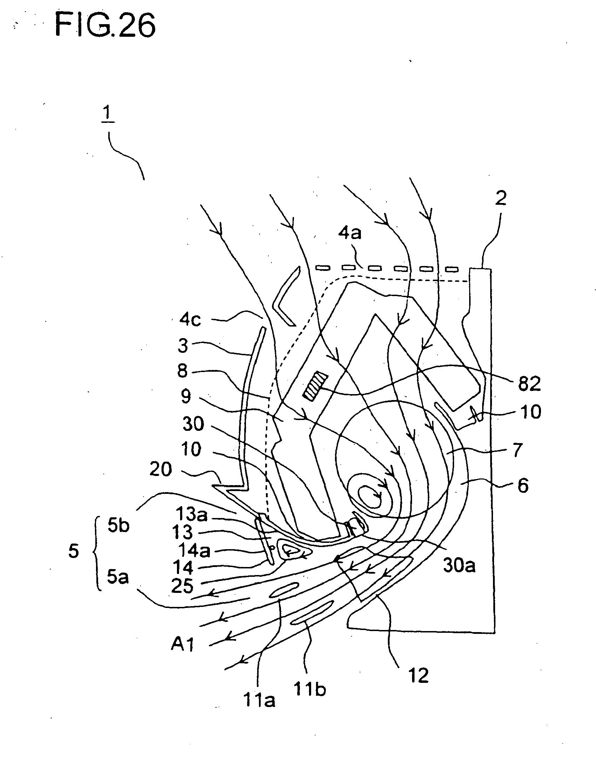

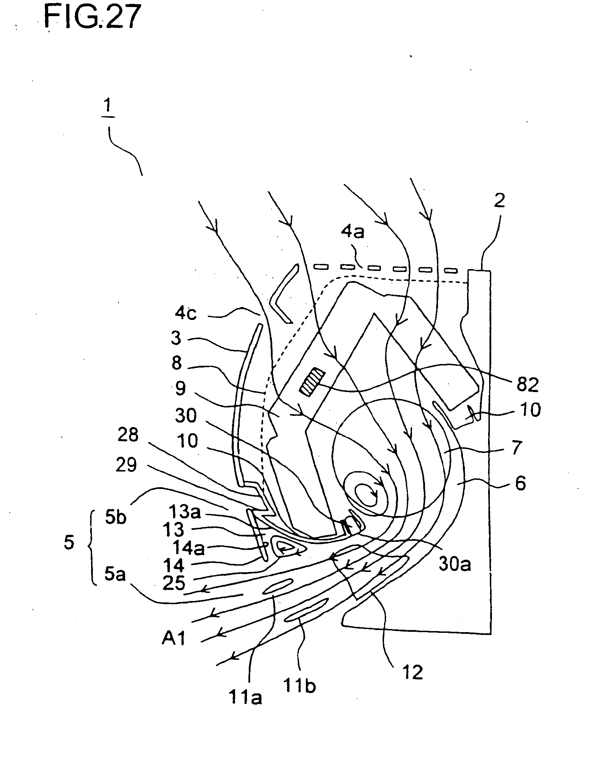

Figs. 26 and 27 are schematic side sectional views showing the indoor units of the air conditioners of a ninth and a tenth embodiment, respectively, of the invention. Such components as are found also in the first and second embodiments shown in Figs. 1 to 17 described previously are identified with common reference numerals. These embodiments have the same constructions as the first and second embodiments except that, instead of the wind direction plate angle detector 76 (see Fig. 5), a temperature sensor 82 is provided for detecting the temperature of the indoor heat exchanger 9.

In Fig. 5, the output of the temperature sensor 82 is fed to the controller 60 so that, according to the result of the detection by the temperature sensor 82, the wind guide plate driver 75 is driven. In other respects, these embodiments are the same as the first embodiment. Moreover, instead of the output of the wind direction plate angle detector 76, the output of the temperature sensor 82 is fed to the controller 60 so that, according to the result of the detection by the temperature sensor 82, the wind guide plate driver 75 is driven. In other respects, these embodiments are the same as the first and second embodiments.

In a similar manner as described previously, when the operation of the air conditioner is started, air in the room is sucked into the indoor unit 1 through the intake ports 4a and 4c. The air taken into the indoor unit 1 exchanges heat with the indoor heat exchanger 9, and is thereby cooled or heated. The air then passes through the air blow passage 6, then has the direction thereof regulated in the right/left and up/down directions by the vertical louvers 12 and the horizontal louvers 11a and 11b, respectively, and is then blown out into the room in a substantially horizontal to downward direction through the blow-out port 5 as indicated by arrows A1.

When the temperature sensor 61 (see Fig. 4) detects that the difference between the room temperature and the set temperature has become small, the blower fan 7 is so controlled that the amount of wind is gradually decreased to, for example, "gentle." Moreover, as shown in Fig. 7 or 15, the horizontal louvers 11a and 11b are rotated so as to slightly open the first opening 5a, and the wind guide plate 14 is rotated so as to open the second opening 5b.

Thus, the conditioned air circulating through the air blow passage 6 circulates through the branch passage 13, and is then blown out through the second opening 5b and through the gap between the horizontal louvers 11a and 11b. Here, the front edge 20b of the wind guide portion 20 or the projecting portion 29 kills the Coanda effect so that, as indicated by arrows A2 (see Figs. 7 or 15), the air is blown out in a forward, upward direction in the form of a jet without flowing along the front panel 3. Thus, the same effects as obtained in the first and second embodiments are obtained.

Through the operation of the remote control unit, while the first opening 5a is open, the second opening 5b is opened. At this time, if, for example, the temperature of the indoor heat exchanger 9 is 10°C or less, the controller 60 so controls that the wind guide plate 14 is set at +30°. If the temperature of the indoor heat exchanger 9 is in the range from 10°C to 15°C, the wind guide plate 14 is set at +20°. If the temperature of the indoor heat exchanger 9 is 15°C or more, the wind guide plate 14 is set at +0°. In this way, as in the first and second embodiments, it is possible to reduce the cold air that hits the user, and thereby to further reduce the discomfort felt by the user. Here, a temperature sensor 82 like the one provided in the fifth and sixth embodiments may be provided.

An eleventh embodiment of the invention will be described below. This embodiment has the same construction as the first embodiment shown in Figs. 1 to 12 described previously except that, instead of the wind direction plate angle detector 76 (see Fig. 5), a rotation rate detector is provided. The rotation rate detector detects the rotation rate of the blower fan 7 and thereby detects the amount of conditioned air that is blown out through the blow-out port 5. In Fig. 5, the output of the rotation rate detector is fed to the controller 60 so that, according to the result of the detection by the rotation rate detector, the wind guide plate driver 75 is driven. In other respects, this embodiment is the same as the first embodiment.

With this construction, through the operation of the remote control unit, while the first opening 5a is open, when the second opening 5b is opened, the angle of the wind guide plate 14 can be varied according to the amount of wind. For example, if the set amount of wind is "powerful," the controller 60 so controls that the wind guide plate 14 is set at 0°. If the set amount of wind is "mild," the wind guide plate 14 is set at +20°. If the set amount of wind is "gentle," the wind guide plate 14 is set at +30°.

Thus, when the amount of wind is small, the conditioned air is blown out upward to prevent the shortening of the distance over which the wind reaches and thereby to achieve the cooling or heating of the room to every corner thereof. By contrast, when the amount of wind is large, the conditioned air is blown out in a substantially horizontal direction to reduce the unnecessary blowing-out of the conditioned air in an upward direction and thereby to achieve efficient cooling or heating. In the second embodiment, a rotation rate detector may be used instead of the wind direction plate angle detector 76; in the fifth and sixth embodiments, a rotation rate detector may be used instead of the temperature sensor 61.

A twelfth embodiment of the invention will be described below. This embodiment has the same construction as the first embodiment shown in Figs. 1 to 12 described previously except that, instead of the wind direction plate angle detector 76 (see Fig. 5), a frequency detector is provided. The frequency detector detects the frequency of the compressor 62 (see Fig. 3). In Fig. 5, the output of the frequency detector is fed to the controller 60 so that, according to the result of the detection of the frequency detector, the wind guide plate driver 75 is driven. In other respects, this embodiment is the same as the first embodiment.

With this construction, through the operation of the remote control unit, while the first opening 5a is open, when the second opening 5b is opened, the angle of the wind guide plate 14 can be varied according to the frequency of the compressor 62. For example, if the frequency is 70 Hz or more, the controller 60 so controls that the wind guide plate 14 is set at +30°. If the frequency is in the range from 40 Hz to 70 Hz, the wind guide plate 14 is set at +20°. If the frequency is 40 Hz or less, the wind guide plate 14 is set at 0°.

In cooling operation, when the frequency of the compressor 62 is high, the cooling performance improves, causing the temperature of the indoor heat exchanger 9 to become low. When the frequency of the compressor 62 is low, the cooling performance lowers, causing the temperature of the indoor heat exchanger 9 to become high. Thus, in a similar manner as described previously, part of the conditioned air with a lower blow-out temperature is blown out more upward. In this way, it is possible to reduce the low-temperature air that hits the user and thereby to further reduce the discomfort felt by the user. In the second embodiment, a frequency detector may be used instead of the wind direction plate angle detector 76; in the fifth and sixth embodiments, a frequency detector may be used instead of the temperature sensor 61.

A thirteenth embodiment of the invention will be described below. This embodiment has the same construction as the first embodiment shown in Figs. 1 to 12 described previously except that, instead of the wind direction plate angle detector 76 (see Fig. 5), a consumed current detector is provided. The consumed current detector is built with a current transformer or the like that generates a secondary voltage proportional to a current, and detects the current consumed by the air conditioner when it is operating. In Fig. 5, the output of the consumed current detector is fed to the controller 60 so that, according to the result of the detection by the consumed current detector, the wind guide plate driver 75 is driven. In other respects, this embodiment is the same as the first embodiment.

With this construction, through the operation of the remote control unit, while the first opening 5a is open, when the second opening 5b is opened, the angle of the wind guide plate 14 can be varied according to the current consumed by the air conditioner when it is operating. For example, if the operation current is 12 A or more, the controller 60 so controls that the wind guide plate 14 is set at +30°. If the operation current is in the range from 7 A to 12 A, the wind guide plate 14 is set at +20°. If the operation current is 7A or less, the wind guide plate 14 is set at +0°.

When the operation current of the air conditioner is large, the frequency of the compressor 62 (see Fig. 3) is, supposed to be high, and thus, in cooling operation, the temperature of the indoor heat exchanger 9 becomes low. When the operation current of the air conditioner is small, the frequency of the compressor 62 is supposed to be low, and thus, in cooling operation, the temperature of the indoor heat exchanger 9 becomes high. Thus, in a similar manner as described previously, part of the conditioned air with a lower blow-out temperature is blown out more upward. In this way, it is possible to reduce the low-temperature air that hits the user and thereby to further reduce the discomfort felt by the user.

The operation current of the air conditioner may increase not only as a result of an increase in the frequency of the compressor 62 but also as a result of an increase in the outdoor-side load or other factors. When the frequency of the compressor 62 increases, the current abruptly increases. The wind guide plate 14 may therefore be driven with consideration given to the variation of the current per unit time. For example, advisably, the above-described control is not performed so long as the variation of the current is 1 A or less, and is performed only when a variation larger than 1 A occurs in the current. In the second embodiment, a consumed current detector may be used instead of the wind direction plate angle detector 76; in the fifth and sixth embodiments, a consumed current detector may be used instead of the temperature sensor 61.

A fourteenth embodiment of the invention will be described below. This embodiment has the same construction as the first embodiment shown in Figs. 1 to 12 described previously except that, instead of the wind direction plate angle detector 76 (see Fig. 5), an outdoor rotation rate detector is provided. The outdoor rotation rate detector detects the rotation rate of the blower fan 65 (see Fig. 3) provided in the outdoor unit, and thereby detects the amount of wind that is sucked into the outdoor unit through an intake port (not illustrated) thereof. In Fig. 5, the output of the outdoor rotation rate detector is fed to the controller 60 so that, according to the result of the detection by the outdoor rotation rate detector, the wind guide plate driver 75 is driven. In other respects, this embodiment is the same as the first embodiment.

With this construction, through the operation of the remote control unit, while the first opening 5a is open, when the second opening 5b is opened, the angle of the wind guide plate 14 can be varied according to the amount of wind sucked into the outdoor unit. For example, if the amount of wind sucked in is "powerful," the controller 60 so controls that the wind guide plate 14 is at +30°. If the amount of wind sucked in is "mild," the wind guide plate 14 is at +20°. If the amount of wind sucked in is "gentle," the wind guide plate 14 is at +0°.

In cooling operation, when the frequency of the compressor 62 (see Fig. 3) is high, the amount of wind sucked in by the blower fan 65 of the outdoor unit is made large, and thus, with the cooling performance improved, the temperature of the indoor heat exchanger 9 becomes low. When the frequency of the compressor 62 (see Fig. 3) is low, the amount of wind sucked in by the blower fan 65 of the outdoor unit is made small, and thus, with the cooling performance lowered, the temperature of the indoor heat exchanger 9 becomes high. Thus, in a similar manner as described previously, part of the conditioned air with a lower blow-out temperature is blown out more upward. In this way, it is possible to reduce the low-temperature air that hits the user and thereby to further reduce the discomfort felt by the user. In the second embodiment, a outdoor rotation rate detector may be used instead of the wind direction plate angle detector 76; in the fifth and sixth embodiments, a outdoor rotation rate detector may be used instead of the temperature sensor 61.

A fifteenth embodiment of the invention will be described below. This embodiment has the same construction as the first embodiment shown in Figs. 1 to 12 described previously except that, instead of the wind direction plate angle detector 76 (see Fig. 5), a humidity sensor is provided. The humidity sensor is provided between the indoor heat exchanger 9 and the air filter 8, and detects the humidity of the air sucked in. In Fig. 5, the output of the humidity sensor is fed to the controller 60 so that, according to the result of the detection by the humidity sensor, the wind guide plate driver 75 is driven. In other respects, this embodiment is the same as the first embodiment.

With this construction, through the operation of the remote control unit, while the first opening 5a is open, when the second opening 5b is opened, the angle of the wind guide plate 14 can be varied according to the humidity of the air sucked in. For example, if the difference between the relative humidity of the air sucked in and the set humidity is 20% or more, the controller 60 so controls that the wind guide plate 14 is set at +30°. If the difference between the relative humidity of the air sucked in and the set humidity is in the range from 5% to 20%, the wind guide plate 14 is set at +20°. If the difference between the relative humidity of the air sucked in and the set humidity is 5% or less, the wind guide plate 14 is set at +0°.

Thus, when the difference between the relative humidity of the air sucked in and the set humidity is large, the conditioned air is blown out more upward so that the air inside the room is fully agitated. This makes it possible to achieve a proper humidity balance quickly to every corner of the room. By contrast, when the difference between the relative humidity of the air sucked in and the set humidity is small, the conditioned air is blown out in a substantially horizontal direction so as to reduce the unnecessary blowing-out thereof in an upward direction. This makes it possible to achieve efficient air conditioning. In the second embodiment, a humidity sensor may be used instead of the wind direction plate angle detector 76; in the fifth and sixth embodiments, a humidity sensor may be used instead of the temperature sensor 61.

A sixteenth embodiment of the invention will be described below. This embodiment has the same construction as the first embodiment shown in Figs. 1 to 12 described previously except that, instead of the wind direction plate angle detector 76 (see Fig. 5), a dust sensor (purity detecting means) is provided. The dust sensor is provided between the indoor heat exchanger 9 and the air filter 8, and detects the amount of dust in the air sucked in to thereby detect the purity of the air in the room. In Fig. 5, the output of the dust sensor is fed to the controller 60 so that, according to the result of the detection by the dust sensor, the wind guide plate driver 75 is driven. In other respects, this embodiment is the same as the first embodiment.

With this construction, through the operation of the remote control unit, while the first opening 5a is open, when the second opening 5b is opened, the angle of the wind guide plate 14 can be varied according to the amount of dust in the air sucked in. For example, if the amount of dust in the air sucked in is large, the controller 60 so controls that the wind guide plate 14 is set at +30°. If the amount of dust in the air sucked in is medium, the wind guide plate 14 is set at +20°. If the amount of dust in the air sucked in is minute, the wind guide plate 14 is set at +0°.

Thus, when the amount of dust contained in the air sucked in is large, the conditioned air is blown out more upward so that the air inside the room is fully agitated. This permits the dust in the room to be taken into the indoor unit, and thus permits the air to be quickly purified by the air filter 8. This makes it possible to purify the air in the entire room in a short time. By contrast, when the amount of dust contained in the air sucked in is small, the conditioned air is blown out in a substantially horizontal direction so as to reduce the unnecessary blowing-out thereof in an upward direction. This makes it possible to achieve efficient air conditioning. Using a HEPA filter or an electric dust collector instead of the air filter 8 (see Fig. 1) is expected to offer a more powerful air purifying effect. In the second embodiment, a dust sensor may be used instead of the wind direction plate angle detector 76; in the fifth and sixth embodiments, a dust sensor may be used instead of the temperature sensor 61.

A seventeenth embodiment of the invention will be described below. In this embodiment, in addition to the construction of the first embodiment shown in Figs. 1 to 12 described previously, a deodorizing device is further provided, and, instead of the wind direction plate angle detector 76 (see Fig. 5), an odor sensor (purity detecting means) is provided. The odor sensor is provided between the indoor heat exchanger 9 and the air filter 8, and detects the content of odor-causing substances in the air sucked in to thereby detect the purity of the air in the room. In Fig. 5, the output of the odor sensor is fed to the controller 60 so that, according to the result of the detection by the odor sensor, the wind guide plate driver 75 is driven. In other respects, this embodiment is the same as the first embodiment.

With this construction, through the operation of the remote control unit, while the first opening 5a is open, when the second opening 5b is opened, the angle of the wind guide plate 14 can be varied according to the content of odor-causing substances in the air sucked in. For example, if the content of odor-causing substances in the air sucked in is large, the controller 60 so controls that the wind guide plate 14 is set at +30°. If the content of odor-causing substances in the air sucked in is medium, the wind guide plate 14 is set at +20°. If the content of odor-causing substances in the air sucked in is minute, the wind guide plate 14 is set at +0°.

Thus, when the content of odor-causing substances in the air sucked in is large, the conditioned air is blown out more upward so that the air inside the room is fully agitated. This permits the air in the room to be taken into the indoor unit, and thus permits the air to be quickly purified by the deodorizing device. This makes it possible to purify the air in the entire room in a short time. By contrast, when the content of odor-causing substances in the air sucked in is small, the conditioned air is blown out in a substantially horizontal direction so as to reduce the unnecessary blowing-out thereof in an upward direction. This makes it possible to achieve efficient air conditioning. In the second embodiment, an order sensor may be used instead of the wind direction plate angle detector 76; in the fifth and sixth embodiments, an order sensor may be used instead of the temperature sensor 61.

An eighteenth embodiment of the invention will be described below. This embodiment has the same construction as the first embodiment shown in Figs. 1 to 12 described previously except that, instead of the wind direction plate angle detector 76 (see Fig. 5), an ion sensor is provided. The ion sensor is provided between the indoor heat exchanger 9 and the air filter 8, and detects the ion concentration in the air sucked in. In Fig. 5, the output of the ion sensor is fed to the controller 60 so that, according to the result of the detection by the ion sensor, the wind guide plate driver 75 is driven. In other respects, this embodiment is the same as the first embodiment.

With this construction, through the operation of the remote control unit, while the first opening 5a is open, when the second opening 5b is opened, the angle of the wind guide plate 14 can be varied according to the ion concentration in the air sucked in. For example, if the ion concentration in the air sucked in is low, the controller 60 so controls that the wind guide plate 14 is set at +30°. If the ion concentration in the air sucked in is medium, the wind guide plate 14 is set at +20°. If the ion concentration in the air sucked in is high, the wind guide plate 14 is set at +0°.

Thus, when the ion concentration in the air sucked in is low, the conditioned air containing a large quantity of ions is blown out more upward so that the air inside the room is fully agitated. This makes it possible to spread the ions quickly over the entire room. By contrast, when the ion concentration in the air sucked in is high, the conditioned air is blown out in a substantially horizontal direction so as to reduce the unnecessary blowing-out thereof in an upward direction. This makes it possible to achieve efficient air conditioning. In the second embodiment, an ion sensor may be used instead of the wind direction plate angle detector 76; in the fifth and sixth embodiments, an ion sensor may be used instead of the temperature sensor 61.

In any of the first to eighteenth embodiments, the top wall surface 13a of the branch passage 13 does not necessarily have to be a flat surface, so long as it is so formed as to rise forward; for example, it may by formed by a plurality of flat surfaces, or may be formed as a curved surface. The top surface of the wind guide portion 20 (see Fig. 1) and the bottom surface of the groove portion 28 (see Fig. 13) may be formed as a surface that extends obliquely upward or obliquely downward from the front edge of the top wall surface 13a of the branch passage 13. That is, so long as the wind guide portion 20 and the projecting portion 29 are so shaped as to cut the air stream that tends to flow along the front face of the front panel 3 under the Coanda effect, they may be given any shapes other than those given thereto in the first to eighteenth embodiments.

### Industrial applicability

According to the present invention, the conditioned air is blown out downward and upward through the blow-out port. Thus, it is possible to prevent the user from constantly receiving cool or warm wind, and to prevent the user from feeling uncomfortable, thereby achieving enhanced comfort. Moreover, the direction in which the air is blown out is varied according to the operation status of the air conditioner or according to the air conditioning status in the room. Thus, it is possible, for example, to blow the conditioned air out downward through the blow-out port immediately after the start of operation to quickly perform air conditioning and then, on completion of air conditioning in the room, to blow the conditioned air upward to obtain enhanced comfort. Even when, immediately after the start of operation, the conditioned air is vigorously blown out downward through the blow-out port, the conditioned air can also be blown out in a substantially horizontal to upward direction through the blow-out port according to the operation status, such as the direction of the wind direction plate. This makes it possible to quickly perform cooling and heating to every corner of the room.

Furthermore, the guide surface that forms the upper wall of the air circulation passage leading to the blow-out port and that is so inclined as to rise forward and the flat or curved surface that extends backward from the front edge of the guide surface are formed by the groove portion or the wind guide portion. This makes it possible to prevent the air blown out upward through the blow-out port from tending to flow along the front face of the air conditioner under the Coanda effect, and this can be achieved without spoiling the appearance of the conditioned air.

Thus, it is possible to prevent short-circuiting and thereby to improve the cooling or heating efficiency. It is also possible, in cooling and dehumidifying operation, to prevent the increase of condensation, and to prevent the freezing and growth of condensed water. This makes it possible to prevent the discharge, into the room, of condensed water or water melted from frozen ice, and to prevent the deformation or destruction of the air conditioner under the pressure exerted by grown ice.

Moreover, since the conditioned air that is blown out upward does not flow along the front face of the air conditioner, it is possible to prevent the lowering of the wind speed caused by the viscosity of air. This permits the conditioned air in the form of a high-speed jet to reach the ceiling of the room, and then flows along the wall surface opposite the air conditioner, then along the floor surface, and then along the wall surface on which the air conditioner is fitted. Thus, the air stream reaches every corner of the room, and achieves room-wide agitation of air. Thus, it is possible to obtain a comfortable space in which, except in an upper portion of the room R, the temperature distribution over the entire user living space is uniform and in which hardly any wind directly hits the user.

According to the present invention, the direction of the wind guide plate is varied according to the direction of the wind direction plate. This makes it possible to vary the circulation pattern of the air in the room to suit the user's purpose, as by reducing the conditioned air that circulates in a lower portion of the room. Thus, it possible to further improve comfort.

According to the present invention, the direction of the wind guide plate is varied according to the operation status of the air conditioner, such as the temperature of the air blown out through the blow-out port, the temperature of the indoor heat exchanger, the operation frequency of the compressor, the current consumed by the air conditioner, or the amount of wind sucked in through the outdoor intake port. This permits, for example, part of the conditioned air with a lower blow-out temperature to be blown out more upward so as to reduce the low-temperature air that hits the user. This makes it possible to further reduce discomfort felt by the user.

According to the present invention, the direction of the wind guide plate is varied according to the amount of wind blown out through the blow-out port. Thus, for example, when the amount of wind is small, the conditioned air is blown out more upward to prevent the shortening of the wind travel distance, achieving cooling or heating to every corner of the room. When the amount of wind is large, the conditioned air is blown out in a substantially horizontal direction to reduce the unnecessary blowing-out thereof in an upward direction, achieving efficient cooling or heating.

According to the present invention, the direction of the wind guide plate is varied according to the air conditioning status in the air, such as the temperature of the air sucked in through the intake port, the humidity of the air sucked in through the intake port, or the ion concentration. Thus, for example, when the difference between the air conditioning degree of the intake air the air conditioning degree set by the user is great, the conditioned air is blown out more upward to fully agitate the air in the entire room. This makes it possible to quickly increase the air conditioning degree to every corner of the room, and thereby to achieve air conditioning in the entire room in a short time. By contrast, when the difference between the air conditioning degree of the intake air the air conditioning degree set by the user is small, the conditioned air is blown out in a substantially horizontal direction to reduce the unnecessary blowing-out thereof in an upward direction, achieving efficient air conditioning.

According to the present invention, the direction of the wind guide plate is varied according to the amount of dust, or the content of odor-causing substances, in the air sucked in through the blow-out port. Thus, for example, when the intake air contains a large quantity of impurities, the conditioned air is blown out more upward to fully agitate the air in the entire room. This makes it possible to take impurities in the room into the indoor unit and thereby to achieve air purification quickly. Thus, it is possible to condition the air in the entire room in a short time. By contrast, when the intake air contains a small quantity of impurities, the conditioned air is blown out in a substantially horizontal direction to reduce the unnecessary blowing-out thereof in an upward direction, achieving efficient air conditioning.

According to the present invention, the blowing-out of air through the second opening can be inhibited by the inhibiting means. This makes it possible to minimize short-circuiting, i.e., the phenomenon in which, due to the presence of a wall or an obstacle near the indoor unit, the air blown out upward is bounced back and is taken in through the blow-out port. Thus, it is possible to control the wind direction in a way that suits the situation in which the air conditioner is used.

## Claims

1. An air conditioner (1) that is fitted on a wall surface in a room and that conditions air taken in through an intake port (4a) and then blows the air out in a direction downward relative to a horizontal direction and in a direction obliquely upward relative to the horizontal direction through an entire blow-out port (5), comprising:
a wind guide plate (14) that is provided at the blow-out port (5) to direct the air in a predetermined direction; and **characterised by**
an ion generating device that generates ions; and
an ion sensor that detects an ion concentration in the room,
wherein the ions are, along with the conditioned air, blown out through the blow-out port (5) into the room, and the direction in which the conditioned air is blown out is varied by the wind guide plate (14) based on the variation of the ion concentration detected by the ion sensor.

2. The air conditioner of claim 1,
wherein the wind guide plate (14) can take:
a position in which it closes the blow-out port (5),
a position in which it directs the conditioned air in a substantially horizontal to downward direction, and
a position in which it directs the conditioned air in a forward, upward direction.

3. The air conditioner of claim 2,
wherein the wind guide plate (14) can additionally take a position in which it forcibly causes short-circuiting.

4. The air conditioner of claim 1,
wherein the blow-out port (5) comprises a first opening (5a) forming a lower part of the blow-out port (5) and a second opening (5b) forming an upper part of the blow-out port (5), and
wherein the wind guide plate (14) is rotatable in an up/down direction so as to open and close the second opening (5b), and when the second opening (5b) is open, an air stream flowing through the second opening (5b) is guided along the wind guide plate (14) to be directed in a substantially horizontal to upward direction.

5. The air conditioner of claim 4,
wherein a wind direction plate (11) is provided that is rotatable in an up/down direction so as to open and close the first opening (5a).

6. The air conditioner of claim 1,
wherein the conditioned air containing the ions is blown out through the blow-out port (5) in a forward, upward direction so as to reach a ceiling surface inside the room, in order to spread the ions over the entire room.

7. The air conditioner of claim 5,
wherein the ions arc spread over the entire room by alternately using an air stream that is blown out through the second opening (5b) in a forward, upward direction and an air stream that is blown out through the first opening (5a) in a forward, downward direction.

## Patentansprüche

1. Klimaanlage (1), die an einer Wandfläche in einem Raum angebracht ist, und die Luft aufbereitet, die durch eine Ansaugöffnung (4a) aufgenommen wird, und die Luft dann durch eine vollständige Luftausgabeöffnung (5) in eine Abwärtsrichtung bezüglich einer horizontalen Richtung und in eine schräge Aufwärtsrichtung bezüglich der horizontalen Richtung herausbläst, umfassend:
ein Windleitblech (14), das an der Luftausgabeöffnung (5) vorgesehen ist, um die Luft in einer vorbestimmten Richtung zu leiten; und **gekennzeichnet ist durch**
eine ionengenerierende Vorrichtung, die Ionen generiert; und
einen Ionensensor, der eine Ionenkonzentration im Raum erkennt,
wobei die Ionen gemeinsam mit der aufbereiteten Luft **durch** die Luftausgabeöffnung (5) in den Raum herausgeblasen werden, und die Richtung, in der die aufbereitete Luft herausgeblasen wird, **durch** das Windleitblech (14) basierend auf der Veränderung der vom Ionenensensor erkannten Ionenkonzentration verändert wird.

2. Klimaanlage nach Anspruch 1,
wobei das Windleitblech (14) folgende Positionen einnehmen kann:
eine Position, in der es die Luftausgabeöffnung (5) schließt,
eine Position, in der es die aufbereitete Luft in eine im Wesentlichen horizontale bis Abwärtsrichtung leitet, und
eine Position, in der es die aufbereitete Luft in eine nach vorne gerichtete Aufwärtsrichtung leitet.

3. Klimaanlage nach Anspruch 2,
wobei das Windleitblech (14) darüber hinaus eine Position einnehmen kann, in der es gewaltsam ein Kurzschließen verursacht.

4. Klimaanlage nach Anspruch 1,
wobei die Luftausgabeöffnung (5) eine erste Öffnung (5a), die einen unteren Teil der Luftausgabeöffnung (5) bildet, und eine zweite Öffnung (5b), die einen oberen Teil der Luftausgabeöffnung (5) bildet, umfasst, und
wobei das Windleitblech (14) in einer Aufwärts-/Abwärtsrichtung drehbar ist, um die zweite Öffnung (5b) zu öffnen und zu schließen, und wenn die zweite Öffnung (5b) offen ist, ein Luftstrom, der durch die zweite Öffnung (5b) strömt, entlang des Windleitblechs (14) geführt wird, um in einer im Wesentlichen horizontalen bis Aufwärtsrichtung geleitet zu werden.

5. Klimaanlage nach Anspruch 4,
wobei ein Windleitblech (14) vorgesehen ist, das in einer Aufwärts-/Abwärtsrichtung drehbar ist, derart dass die erste Öffnung (5a) geöffnet und geschlossen wird.

6. Klimaanlage nach Anspruch 1,
wobei die aufbereitete Luft, die die Ionen enthält, durch die Luftausgabeöffnung (5) in eine nach vorne gerichtete Aufwärtsrichtung herausgeblasen wird, derart dass eine Deckenfläche im Raum erreicht wird, um die Ionen über den gesamten Raum zu verbreiten.

7. Klimaanlage nach Anspruch 5,
wobei die Ionen durch abwechselndes Verwenden eines Luftstroms, der durch die zweite Öffnung (5b) in eine vorwärts gerichtete Aufwärtsrichtung herausgeblasen wird, und eines Luftstroms, der durch die erste Öffnung (5a) in eine vorwärts gerichtete Abwärtsrichtung herausgeblasen wird, über den gesamten Raum verbreitet werden.

## Revendications

1. Climatiseur (1) qui est installé sur une surface de paroi dans une pièce et qui conditionne l'air entré par un orifice d'entrée (4a) et expulse ensuite l'air dans une direction descendante par rapport à une direction horizontale, et dans une direction oblique montante par rapport à la direction horizontale, par un orifice d'expulsion entier (5), comprenant :
une plaque de guidage d'air forcé (14) qui est disposée sur l'orifice d'expulsion (5) pour diriger l'air dans une direction prédéterminée ; et **caractérisé par**
un dispositif générateur d'ions pour générer des ions ; et
un capteur d'ions qui détecte une concentration ionique dans la pièce,
étant précisé que les ions, avec l'air conditionné, sont expulsés dans la pièce par l'orifice d'expulsion (5), et la direction dans laquelle l'air conditionné est expulsé est modifiée par la plaque de guidage d'air forcé (14) sur la base de la variation de la concentration ionique détectée par le capteur d'ions.

2. Climatiseur de la revendication 1,
étant précisé que la plaque de guidage d'air forcé (14) peut adopter :
une position dans laquelle elle ferme l'orifice d'expulsion (5),
une position dans laquelle elle dirige l'air conditionné dans une direction globalement horizontale à descendante, et
une position dans laquelle elle dirige l'air conditionné dans une direction avant et montante.

3. Climatiseur de la revendication 2,
étant précisé que la plaque de guidage d'air forcé (14) peut adopter en supplément une position dans laquelle elle provoque de manière forcée un court-circuit.

4. Climatiseur de la revendication 1,
étant précisé que l'orifice d'expulsion (5) comprend une première ouverture (5a) qui forme une partie inférieure dudit orifice d'expulsion (5), et une seconde ouverture (5b) qui forme une partie supérieure dudit orifice d'expulsion (5), et
que la plaque de guidage d'air forcé (14) est apte à pivoter dans une direction montante/descendante de manière à ouvrir et fermer la seconde ouverture (5b), et quand la seconde ouverture (5b) est ouverte, un courant d'air qui la traverse est guidé le long de la plaque de guidage d'air forcé (14) pour être dirigé dans une direction globalement horizontale à montante.

5. Climatiseur de la revendication 4,
étant précisé qu'il est prévu une plaque de direction d'air forcé (11) qui est apte à pivoter dans une direction montante/descendante de manière à ouvrir et fermer la première ouverture (5a).

6. Climatiseur de la revendication 1,
étant précisé que l'air conditionné contenant les ions est expulsé par l'orifice d'expulsion (5) dans une direction avant et montante de manière à atteindre une surface de plafond dans la pièce, afin de répartir les ions dans toute la pièce.

7. Climatiseur de la revendication 5,
étant précisé que les ions sont répartis dans toute la pièce grâce à l'utilisation alternée d'un courant d'air qui est expulsé par la seconde ouverture (5b) dans une direction avant et montante, et d'un courant d'air qui est expulsé par la première ouverture (5a) dans une direction avant et descendante.
